# EUROPÄISCHE PATENTSCHRIFT

(11) **EP 4 658 536 B1**
(45) Veröffentlichungstag und Bekanntmachung des Hinweises auf die Patenterteilung: **02.09.2026**
(21) Anmeldenummer: 24700627.3
(22) Anmeldetag: 16.01.2024
(51) Int. Cl.: B60T 8/88, B60T 13/68, B60T 17/22

(54) **VERFAHREN ZUR BESTIMMUNG EINER STRÖMUNGSWIDERSTANDSKENNGRÖSSE**
METHOD FOR DETERMINING A FLOW RESISTANCE CHARACTERISTIC VARIABLE
PROCÉDÉ DE DÉTERMINATION D'UNE VARIABLE CARACTÉRISTIQUE DE RÉSISTANCE À L'ÉCOULEMENT

(30) Priorität: 31.01.2023 DE 102023102237
(43) Veröffentlichungstag der Anmeldung: 10.12.2025
(73) Patentinhaber: ZF CV Systems Global GmbH, 3006 Bern (CH)
(72) Erfinder: PRACHT, Joachim, 30629 Hannover (DE); BROCKMEYER, Ulrich, 31028 Gronau OT Banteln (DE)
(74) Vertreter: Rabe, Dirk-Heinrich
(86) Internationale Anmeldenummer: PCT/EP2024/050834
(87) Internationale Veröffentlichungsnummer: WO 2024/160529

(56) Entgegenhaltungen:
- DE-A1- 102021 118 006
- US-A1- 2022 089 138

## Beschreibung

Die vorliegende Erfindung betrifft ein Verfahren zur Bestimmung einer Strömungswiderstandskenngröße in einem elektropneumatischen Bremssystem eines Fahrzeugs.

In modernen Bremssystemen können die Bremsen eines Fahrzeuges radindividuell oder achsindividuell angesteuert werden, wobei diese dazu mit einem bestimmten Bremsdruck beaufschlagt werden. Die Bereitstellung eines Bremsdrucks erfolgt in der Regel mittels Achsmodulatoren, welche mittels schaltbarer Ventile einen Bremsdruck über Druckluftleitungen an die Bremszylinder bzw. Betriebsbremsen an der jeweiligen Fahrzeugachse aussteuern. An einer Vorderachse erfolgt diese Aussteuerung beispielsweise achsweise, d.h. der vom Vorderachs-Achsmodulator über einen einzigen Druckkanal ausgesteuerte Bremsdruck wird an beide Bremszylinder bzw. Betriebsbremsen der Vorderachse gleichermaßen ausgesteuert. An der Hinterachse erfolgt diese Aussteuerung hingegen meist mittels Mehrkanal Hinterachs-Achsmodulatoren, wobei jeweils ein individueller Bremsdruck pro Hinterrad ausgesteuert wird.

Zwischen dem Achsmodulator und den jeweiligen Bremszylindern bzw. Betriebsbremsen können weiterhin ABS-Ventile angeordnet sein, welche im Falle einer ABS-Regelung die pneumatische Verbindung zwischen dem jeweiligen Achsmodulator und dem jeweiligen Bremszylinder zumindest kurzzeitig unterbrechen können, um den am jeweiligen Bremszylinder anliegenden Bremsdruck zu halten oder zu reduzieren und somit ein Blockieren des jeweiligen Rades zu verhindern. Typischerweise sind ABS-Ventile an der Vorderachse zwischen dem Vorderachs-Achsmodulator und den jeweiligen Bremszylindern an den Vorderrädern angeordnet, wohingegen bei einem Mehrkanal Hinterachs-Achsmodulator die ABS-Funktion bereits mit umgesetzt wird, so dass auf zusätzliche ABS-Ventile verzichtet werden kann.

Über einen in dem jeweiligen Achsmodulator integrierten Drucksensor können die vom Druckmodulator in die jeweilige Druckleitung ausgesteuerten Bremsdrücke überwacht werden, die bei ausgebildeter pneumatischer Verbindung auch in etwa den Bremsdrücken am Bremszylinder entsprechen. Die genaue Kenntnis der am jeweiligen Bremszylinder anliegenden Bremsdrücke kann beispielsweise eine Eingangsgröße für ein ABS-System sein oder dazu dienen, den aktuellen Zustand des pneumatischen Systems besser einschätzen zu können.

Die vom Druckmodulator ausgesteuerten Bremsdrücke und die am jeweiligen Bremszylinder wirkenden Bremsdrücke sind dabei erst nach einer gewissen Zeitdauer identisch, wobei diese Zeitdauer im Wesentlichen von der Länge des pneumatischen Leitungssystems und den Luftströmungswiderständen innerhalb des pneumatischen Leitungssystems abhängt. Sowohl die Länge des pneumatischen Leitungssystems als auch die auftretenden Luftströmungswiderstände sind Kenngrößen, die für das jeweilige Bremssystem charakteristisch sind. Die Luftströmungswiderstände sind dabei beispielsweise durch die Oberflächenrauheit der verbauten Komponenten, Drosseln, Volumengrößen, Rohrlängen und weiteren Größen gegeben. Während die Länge des pneumatischen Leitungssystems während der Lebensdauer des Fahrzeugs konstant bleibt, kommt es bei den Luftströmungswiderständen aufgrund von Alterungseffekten zu Veränderungen. Um den Zustand des pneumatischen Systems abzuschätzen, ist dies zu berücksichtigen.

Zur Bestimmung der für das Bremssystem charakteristischen Luftströmungswiderstände ist es erforderlich, dass Luftströmungswiderstandswerte für einzelnen Abschnitte eines Bremssystems manuell bestimmt werden und nachfolgend manuell in ein Bremssteuersystem eingepflegt werden. Dies ist aufgrund der manuell erforderlichen Tätigkeit sehr aufwändig und es besteht der Nachteil, dass in Bremssystemen auftretende Alterungseffekte, welche mitunter gravierende Einflüsse auf die Luftströmungswiderstände eines Bremssystems haben, nicht oder nur bedingt berücksichtigt werden können, da eine fortlaufende manuelle Bestimmung nicht möglich ist.

Die US2022089138A1 offenbart ein Verfahren zur Bremssteuerung für schwere Fahrzeuge mittels Aktivieren von zwei elektropneumatischen Proportionalventil-Steuermodulen, um eine Bremsung entlang eines elektrischen Bremskreises der Vorderachse bzw. eines elektrischen Bremskreises der Hinterachse durchzuführen; während die beiden elektropneumatischen Proportionalventil-Steuermodule eine Bremsung entlang des elektrischen Bremskreises der Vorderachse und des elektrischen Bremskreises der Hinterachse durchführen, und mittels Beurteilen von Fehlfunktionen durch Erkennen der beiden elektropneumatischen Proportionalventil-Steuermodule; wenn keine der Fehlfunktionen erkannt wird, führen die beiden elektropneumatischen Proportionalventil-Steuermodule weiterhin eine Bremsung entlang des elektrischen Bremskreises der Vorderachse und des elektrischen Bremskreises der Hinterachse durch; und, wenn eine oder mehrere Fehlfunktionen erkannt werden, Einschalten eines Bremspedal-Kabel-Steuermoduls, um das Bremspedal des Bremsventils zu steuern und eine Bremsung durchzuführen. Darüber hinaus ist auch eine Bremssteuervorrichtung für schwere Fahrzeuge vorgesehen.

Die DE102021118006A1 betrifft ein Verfahren zur Funktionsüberprüfung eines druckmittelbetriebenen elektronischen Bremssystems eines Fahrzeugs, mit einer als Achsmodulator bezeichneten Ventil- und Sensoreinrichtung, mit mindestens einem Bremszylinder zur Bremsbetätigung eines Fahrzeugrades, mit mindestens einem dem wenigstens einen Bremszylinder zugeordneten Antiblockiersystem-Magnetregelventil, und mit einer elektronischen Steuereinheit, welche mit der Ventil- und Sensoreinrichtung sowie mit dem mindestens einen Antiblockiersystem-Magnetregelventil elektrisch verbunden ist.

Es ist daher die Aufgabe der vorliegenden Erfindung, ein Verfahren zum Bestimmen von Strömungswiderstandskenngrößen zu schaffen, mittels dem der Zustand des pneumatischen Bremssystems ermittelt werden kann.

Diese Aufgabe wird erfindungsgemäß gelöst durch ein Verfahren zur Bestimmung einer Strömungswiderstandskenngröße in einem elektropneumatischen Bremssystem eines Fahrzeugs gemäß dem unabhängigen Patentanspruch 1, wobei die Unteransprüche bevorzugte Weiterbildungen und Ausführungsformen des Verfahrens beschreiben.

Erfindungsgemäß ist demnach ein Verfahren zur Bestimmung einer Strömungswiderstandskenngröße in einem elektro-pneumatischen Bremssystem eines Fahrzeugs vorgesehen, wobei das Bremssystem mindestens aufweist:
- einen Achsmodulator, beispielsweise einen Vorderachs-Achsmodulator (z.B. Einkanal) oder einen Hinterachs-Achsmodulator (z.B. Mehrkanal) mit
   -- einem Achsmodulator-Einlassventil zur Druckbeaufschlagung einer an mindestens einem Arbeitsanschluss des jeweiligen Achsmodulators angeschlossenen Druckleitung mit Druckluft aus einem über eine Zuleitung an den Achsmodulator angeschlossenen Druckluftreservoir,
   -- einem Achsmodulator-Auslassventil zur Entlüftung der Druckleitung über einen Achsmodulator-Auslass, und
   -- einem Drucksensor, der ausgebildet ist, einen der jeweiligen Druckleitung zugeordneten Druckwert zu ermitteln; und
- mindestens eine an die Druckleitung angeschlossene Betriebsbremse bzw. Betriebsbremszylinder,
   umfassend die folgenden Schritte,
- Ermitteln oder Aufzeichnen eines ersten Druckwertes mittels des Drucksensors des Achsmodulators, während der Achsmodulator über den Arbeitsanschluss und über die Druckleitung mit der mindestens einen Betriebsbremse druckleitend verbunden bzw. strömungsverbunden ist und der Achsmodulator in eine Druckhalte-Stellung gebracht ist, d.h. das Achsmodulator-Einlassventil und das Achsmodulator-Auslassventil geschlossen sind, um den ausgesteuerten Bremsdruck zu halten, so dass der vom Achsmodulators ausgesteuerte und vom Drucksensor aufgezeichnete Druckwert nach einer gewissen Zeit auch an der jeweiligen Betriebsbremse wirkt;
- Erzeugen eines Druckimpulses in der Druckleitung zu einem ersten Zeitpunkt;
- Ermitteln eines zweiten Druckwerts mittels des Drucksensors des Achsmodulators zu einem zweiten Zeitpunkt nach dem Erzeugen des Druckimpulses; und
- Bestimmen einer Strömungswiderstandskenngröße für einen Strömungspfad innerhalb des Bremssystems, wobei sich der erzeugte Druckimpuls innerhalb dieses Strömungspfades ausbreitet, in Abhängigkeit einer zeitlichen Veränderung des zweiten Druckwerts gegenüber dem ersten Druckwert.

Als Druckimpuls wird dabei eine (pulsartige) Änderung des Bremsdruckes in der jeweiligen Druckleitung oder dem jeweiligen Abschnitt der Druckleitung bzw. dem jeweiligen Strömungspfad verstanden, wobei der Bremsdruck durch die (pulsartige) Änderung entweder erhöht oder reduziert wird. Vorzugsweise wird also zum ersten Zeitpunkt eine pulsartige Druckänderung erzeugt und die daraus resultierende pneumatische Reaktion im jeweiligen Strömungspfad zum zweiten Zeitpunkt zeitlich ausgewertet, um daraus die Strömungswiderstandskenngröße als Maß für den Luftströmungswiderstand des jeweiligen Strömungspfades zu ermitteln. Diese pulsartige Druckänderung findet zu einem ersten Zeitpunkt statt, so dass zum ersten Zeitpunkt kurzzeitig noch der aufgezeichnete bzw. ermittelte erste Druckwert in der Druckleitung vorliegt und zeitlich anschließend der Druck entsprechend verändert wird. Die Erzeugung des Druckimpulses ist dabei auf verschiedene Arten möglich, welche in den weiteren Ausführungsformen als einzelne Druckimpulsschritte näher beschrieben werden.

Um bei dem Ermitteln bzw. Aufzeichnen des ersten Druckwertes sicherzustellen, dass sich der an der Betriebsbremse wirkende Bremsdruck an den vom Achsmodulator ausgesteuerten Bremsdruck angeglichen hat, wird der erste Druckwert vorzugsweise nach einer entsprechenden Zeitverzögerung nach der letzten Betätigung des Achsmodulator-Einlassventil und/oder Achsmodulator-Auslassventils ermittelt, so dass davon ausgegangen werden kann, dass der in der Druckleitung vorherrschende Druckwert tatsächlich über die gesamte Länge in etwa konstant ist.

Nach dem ersten Zeitpunkt und/oder nach dem Erzeugen des Druckimpulses wird ein zweiter Druckwert zu einem zweiten Zeitpunkt aufgenommen, vorzugsweise dann, wenn der in der Druckleitung vorherrschende Druckwert noch nicht über die gesamte Länge des jeweiligen Strömungspfades konstant ist, das heißt sich noch über die gesamte Länge angeglichen hat. Dieser zweite Druckwert wird im Falle eines Druckimpulses der durch eine Druckerhöhung erzeugt wurde größer sein als der erste Druckwert, während der zweite Druckwert im Falle eines Druckimpulses der durch eine Druckverringerung erzeugt wurde kleiner sein wird als der erste Druckwert. Die Strömungswiderstandskenngröße lässt sich dann aus dem zeitlichen Verlauf zwischen dem ersten Druckwert und dem zweiten Druckwert ermitteln, der beispielsweise aus dem Druckgradienten zwischen dem ersten Druckwert und dem zweiten Druckwert folgt, beispielsweise aus einem Quotienten aus (p2-p1) und (t2-t1).

Vorzugsweise ist dabei weiterhin vorgesehen, dass auch der zweite Druckwert ermittelt wird, während der Achsmodulator über den Arbeitsanschluss und über die Druckleitung mit der mindestens einen Betriebsbremse druckleitend verbunden bzw. strömungsverbunden ist und der Achsmodulator in eine Druckhalte-Stellung gebracht ist. Es wird also derselbe Zustand eingestellt wie beim Aufzeichnen des ersten Druckwertes, um beide Werte vergleichen und den Anteil der auf den Strömungswiderstand abfällt abschätzen zu können.

Das zugrundliegende Prinzip besteht darin, dass das Erzeugen eines Druckimpulses an einer Stelle in der Druckleitung bzw. im Strömungspfad erfolgt und die Luft innerhalb der Druckleitung bzw. des Strömungspfades erst mit einer zeitlichen Verzögerung nachfließt. Die zeitliche Verzögerung ist dabei gerade abhängig von der Länge der Druckleitung bzw. des Strömungspfades sowie auftretenden Alterungseffekten bzw. der aktuellen Beschaffenheit der Druckleitungen sowie der pneumatischen Komponenten. Aus einer zeitlichen Betrachtung der jeweiligen Druckwerte lässt sich also die Strömungswiderstandskenngröße des betreffenden Strömungspfades als Maß des Luftströmungswiderstandes und auch deren Veränderung mit der Zeit ermitteln. Im Laufe der Zeit kann sich beispielsweise der Querschnitt der Druckleitung zusetzen und somit verändern oder andere Alterungseffekte auftreten, was sich in einer Änderung der Strömungswiderstandskenngröße äußert.

So kann beispielsweise in regelmäßigen Abständen bei einem vorgegebenen ersten Druckwert ein definierter Druckimpuls zum ersten Zeitpunkt erzeugt werden, und sich zu immer demselben zweiten Zeitpunkt (in Relation zum ersten Zeitpunkt) der zweite Druckwert ermittelt werden. Verändert sich dieser zweite Druckwert im Laufe der Zeit, so ändert sich auch die Strömungswiderstandskenngröße, da sich der zeitliche Verlauf zwischen dem ersten und zweiten Druckwert ändert. Auf diese Weise kann auf einer Alterung der Druckleitung bzw. des jeweiligen Strömungspfades geschlossen werden. Alternativ kann auch ermittelt werden, zu welchem zweiten Zeitpunkt ausgehend von einem festen ersten Zeitpunkt und einem festgelegten ersten Druckwert ein festgelegter zweiter Druckwert erreicht wird. Ändert sich der zweite Zeitpunkt in unterschiedlichen Messungen, weist dies auf eine Änderung der Strömungswiderstandskenngröße hin, beispielsweise aufgrund von Alterungseffekten. Auch hier hat sich der zeitliche Verlauf zwischen dem (festgelegten) ersten und dem (festgelegten) zweiten Druckwert verändert. Die Ermittlung der Strömungswiderstandskenngröße kann aber auch durch eine freie Wahl der Zeitpunkte und Druckwerte ermittelt und überwacht werden, insbesondere aus dem Druckgradienten.

Somit ist es mittels des erfindungsgemäßen Verfahrens möglich, die sich im Laufe der Zeit verändernden Luftströmungswiderstände eines elektropneumatischen Bremssystems anhand von sich verändernden Strömungswiderstandskenngrößen zu überwachen oder abzuschätzen und dadurch im Betrieb des Bremssystems den Zustand entsprechend zu berücksichtigen. Auch eine manuelle Ermittlung und Eingabe kann entfallen, da die Luftströmungswiderstände anhand der ermittelten Strömungswiderstandskennlinie abgeschätzt und im Bremssystem verwendet werden können.

Die zur Durchführung des Verfahrens erforderlichen pneumatischen Komponenten sind bei einem Fahrzeug mit einem elektropneumatischen Bremssystem sowohl an der Vorderachse als auch an der Hinterachse bereits vorhanden, so dass zur Durchführung des erfindungsgemäßen Verfahrens keinerlei weitere pneumatische Komponenten verbaut werden müssen. Es ist lediglich eine softwareseitige Anpassung im jeweiligen Steuergerät (ECU) nötig, um die einzelnen pneumatischen Komponenten entsprechend anzusteuern. Somit lässt sich mittels des erfindungsgemäßen Verfahrens eine Strömungswiderstandskenngröße für die Druckleitungen und pneumatischen Komponenten an beliebiger Stelle im Bremssystem ermitteln.

Vorzugsweise ist dabei vorgesehen, dass der Druckimpuls durch Einstellen einer Druckaufbau-Stellung des Achsmodulators und/oder durch Öffnen eines Achsmodulator-Einlassventils bei gleichzeitig geschlossenem Achsmodulator-Auslassventil erzeugt wird. Dadurch ergibt sich ein Druckimpuls, der beispielsweise durch einen Strömungspfad (vgl. erster oder fünfter Strömungspfad) geleitet wird, der die an den jeweiligen Achsmodulator über den Arbeitsanschluss angeschlossene Druckleitung, eine Zuleitung zwischen einem Druckluftreservoir und dem jeweiligen Achsmodulator sowie pneumatische Komponenten innerhalb der jeweiligen pneumatisch angesteuerten Betriebsbremse und innerhalb des Achsmodulators, insbesondere das Achsmodulator-Einlassventil, umfasst. Befindet sich ergänzend ein ABS-Ventil in der Druckleitung, beispielsweise an einer Vorderachse, umfasst der Strömungspfad auch noch dieses ABS-Ventil, da der Druckimpuls dann auch dieses durchströmt.

Das Einstellen der Druckaufbau-Stellung des Achsmodulators stellt eine einfache Möglichkeit der Erzeugung eines Druckimpulses dar, wobei durch das Öffnen des Achsmodulator-Einlassventils Druckluft aus dem jeweiligen Druckluftreservoir in die Druckluftleitung eingeleitet wird, was zu einem pulsartigen Anstieg des Druckwerts in der Druckleitung und damit zu einem Druckimpuls führt. Diese Art der Erzeugung des Druckimpulses ist sowohl für einen Hinterachs-Achsmodulator mit integrierter ABS-Funktion als auch einen Vorderachs-Achsmodulator mit nachgeschalteten ABS-Ventilen in der Druckleitung geeignet.

Die in den Strömungspfaden auftretenden Luftströmungswiderstände können auch richtungsabhängig sein, beispielsweise aufgrund von Drosseln und Engstellen welche je nach Strömungsrichtung unterschiedliche zum Luftströmungswiderstand beitragen. Durch das Einstellen der Druckaufbau-Stellung des Achsmodulators wie oben beschrieben lässt sich eine Strömungswiderstandskenngröße bestimmen, welche bei der Druckbeaufschlagung, also beim Betätigen der Bremsen relevant ist, so dass dies beim Betrieb der Bremsen bei einer Druckerhöhung entsprechend berücksichtigt werden kann.

Gemäß einer weiteren Ausführungsform des Verfahrens ist vorzugsweise vorgesehen, dass der Druckimpuls durch Einstellen einer Druckabbau-Stellung des Achsmodulators und/oder durch Öffnen des Achsmodulator-Auslassventils bei gleichzeitig geschlossenem Achsmodulator-Einlassventil erzeugt wird. Dadurch ergibt sich ein Druckimpuls, der beispielsweise durch einen Strömungspfad (vgl. zweiter oder sechster Strömungspfad) geleitet wird, der die an den jeweiligen Achsmodulator über den Arbeitsanschluss angeschlossene Druckleitung sowie pneumatische Komponenten innerhalb der jeweiligen pneumatisch angesteuerten Betriebsbremse und innerhalb des Achsmodulators, insbesondere das Achsmodulator-Auslassventil sowie einen Achsmodulator-Auslass, umfasst. Befindet sich ergänzend ein ABS-Ventil in der Druckleitung, beispielsweise an einer Vorderachse, umfasst der (zweite) Strömungspfad auch noch dieses ABS-Ventil, da der Druckimpuls dann auch dieses durchströmt.

Durch das Öffnen des Achsmodulator-Auslassventils wird die Druckleitung entlüftet, was zu einer pulsartigen Verringerung des Druckwerts in der Druckleitung und damit ebenfalls zu einem Druckpuls führt. Dadurch lässt sich eine Strömungswiderstandskenngröße bestimmen, welche bei der Entlüftung, also beim Lösen der Bremsen relevant ist, so dass dies beim Betrieb der Bremsen bei einer Reduzierung des Bremsdruckes entsprechend berücksichtigt werden kann.

Gemäß einer weiteren Ausführungsform des Verfahrens ist vorzugsweise vorgesehen, dass das Bremssystem ferner ein in der jeweiligen Druckleitung angeordnetes ABS-Ventil aufweist, mit
- einem ABS-Einlassventil zur Druckbeaufschlagung eines Zwischenabschnittes zwischen dem ABS-Ventil und der jeweiligen Betriebsbremse mit Druckluft aus der jeweiligen Druckleitung, und
- einem ABS-Auslassventil zur Entlüftung des Zwischenabschnittes über einen ABS-Auslass,
wobei das Ermitteln des ersten Druckwertes erfolgt, während das ABS-Ventil in der jeweiligen Druckleitung in eine Druckaufbau-Stellung verstellt ist und der Druckimpuls erzeugt wird, während der Achsmodulator in die Druckhalte-Stellung gebracht ist. Dadurch kann ein Druckimpuls erzeugt werden, der beispielsweise durch einen Strömungspfad geleitet wird, der die an den jeweiligen Achsmodulator über den Arbeitsanschluss angeschlossene Druckleitung vollständig (dritter Strömungspfad) oder zumindest teilweise (vierter Strömungspfad), das jeweilige ABS-Ventil, insbesondere das ABS-Auslassventil, das ABS-Einlassventil und einen ABS-Ventil-Auslass, sowie pneumatische Komponenten innerhalb der jeweiligen pneumatisch angesteuerten Betriebsbremse, umfasst.

Der Druckimpuls kann in diesem Aufbau mit einem ABS-Ventil auf unterschiedliche Weise erzeugt werden, wobei vorzugsweise vorgesehen ist, dass
- der Druckimpuls durch Einstellen einer ersten Druckabbau-Stellung des ABS-Ventils in der jeweiligen Druckleitung erzeugt wird, wobei in der ersten Druckabbau-Stellung das ABS-Auslassventil des ABS-Ventils geöffnet und das ABS-Einlassventil des ABS-Ventils geschlossen ist oder wird (vierter Strömungspfad), oder
- der Druckimpuls durch Einstellen einer zweiten Druckabbau-Stellung des ABS-Ventils erzeugt wird, wobei in der zweiten Druckabbau-Stellung das ABS-Auslassventil und das ABS-Einlassventil des ABS-Ventils in der jeweiligen Druckleitung beide geöffnet sind oder werden (dritter Strömungspfad).

Beide Varianten stellen eine Möglichkeit der Erzeugung eines Druckpulses zum Beispiel an einer Vorderachse mit einem dem Achsmodulator nachgeschaltetem ABS-Ventil dar. Das Aufzeichnen des ersten Druckwertes bei geöffnetem ABS-Einlassventil erfolgt demnach während der Achsmodulator druckleitend über die Druckleitung mit der jeweiligen Betriebsbremse verbunden ist. Besonders vorteilhaft ist, dass durch die angegebene entlüftende Stellung des ABS-Ventils ein Druckimpuls erzeugt wird, der sich auch in einem Zwischenabschnitt zwischen dem ABS-Ventil und der jeweiligen Betriebsbremse ausbreitet, so dass mit dem erfindungsgemäßen Verfahren auch eine Strömungswiderstandskenngröße bestimmbar ist, welche diesen Zwischenabschnitt repräsentiert. Die Kenntnis dieser Strömungswiderstandskenngröße ist beispielsweise bei einer Ansteuerung des ABS-Ventils im Rahmen einer ABS-Regelung von Interesse, bei der dieser Zwischenabschnitt ebenfalls beim Entlüften durchströmt wird, so dass in Kenntnis der Strömungswiderstandskenngröße eine Abschätzung des genauen Zustands des Bremssystems während einer solchen ABS-Regelung möglich ist.

Vorzugsweise ist weiterhin vorgesehen, dass der zweite Druckwert nach dem Erzeugen des Druckimpulses zum zweiten Zeitpunkt ermittelt wird, während das ABS-Auslassventil des jeweiligen ABS-Ventils geschlossen ist oder nachdem das ABS-Auslassventil des jeweiligen ABS-Ventils geschlossen wurde, und das ABS-Einlassventil des ABS-Ventils geöffnet ist oder nachdem das ABS-Einlassventil des ABS-Ventils geöffnet wurde. Zum Aufzeichnen des zweiten Druckwertes wird also nachdem Erzeugen des Druckimpulses wieder der Zustand wie beim Aufzeichnen des ersten Druckwertes eingestellt, d.h. das jeweilige ABS-Ventil in die Druckaufbau-Stellung gebracht, so dass der Achsmodulator mit den Betriebsbremsen strömungsverbunden ist.

In jeglichen Ausführungsformen kann vorzugsweise vorgesehen sein, dass der Druckwert über den jeweiligen Drucksensor kontinuierlich ermittelt wird. Hierdurch wird ermöglicht, dass eine Vielzahl von Zeitpunkten und diesen zugeordnete Druckwerten zur Verfügung steht, aus denen dann ein zweiter Zeitpunkt und ein zweiter Druckwert ausgewählt werden können, aus denen dann die Strömungswiderstandskenngröße folgt. Dadurch kann die Genauigkeit und Zuverlässigkeit der Bestimmung verbessert werden.

Gemäß einer mit sämtlichen Ausführungsformen des Verfahrens kompatiblen Ausführungsform werden die bestimmten Strömungswiderstandskenngrößen in einen nichtflüchtigen Speicher gespeichert.

Dies ermöglicht eine Beobachtung und einen Abgleich mit historischen Daten, so dass aktuelle bestimmte Strömungswiderstandskenngrößen mit vorherigen Werten verglichen werden können, was wiederum Rückschlüsse auf Alterungserscheinungen ermöglicht. Durch den nicht flüchtigen Speicher stehen die Strömungswiderstandskenngrößen auch nach einem Neustart des Fahrzeugs oder einer sonstigen stromlosen Phase des Fahrzeugs zur Verfügung.

Die Erfindung wird im Folgenden anhand der beiliegenden Zeichnungen näher erläutert. Es zeigen:
- Fig. 1: eine Ansicht eines elektropneumatischen Bremssystems eines Fahrzeugs;
- Fig. 2: eine schematische Ansicht des Bremssystem gemäß Fig. 1 an einer Vorderachse;
- Fig. 3: das Bremssystem aus Fig. 2 während der Durchführung eines Befüllungsschritts;
- Fig. 4: das Bremssystem aus Fig. 2 während der Durchführung eines Aufzeichnungsschritts;
- Fig. 5A: das Bremssystem aus Fig. 2 während der Durchführung eines ersten Druckimpulsschritts;
- Fig. 5B: das Bremssystem aus Fig. 2 während der Durchführung eines zweiten Druckimpulsschritts;
- Fig. 5C: das Bremssystem aus Fig. 2 während der Durchführung eines dritten Druckimpulsschritts;
- Fig. 5D: das Bremssystem aus Fig. 2 während der Durchführung eines vierten Druckimpulsschritts;
- Fig. 6: Ablauf eines Verfahrens zur Bestimmung einer Strömungswiderstandskenngröße;
- Fig. 7: eine schematische Ansicht des Bremssystems aus Fig. 1 an einer Hinterachse;
- Fig. 8: das Bremssystem aus Fig. 7 während eines fünften Druckimpulsschritts; und
- Fig. 9: das Bremssystem aus Fig. 7 während eines sechsten Druckimpulsschritts;

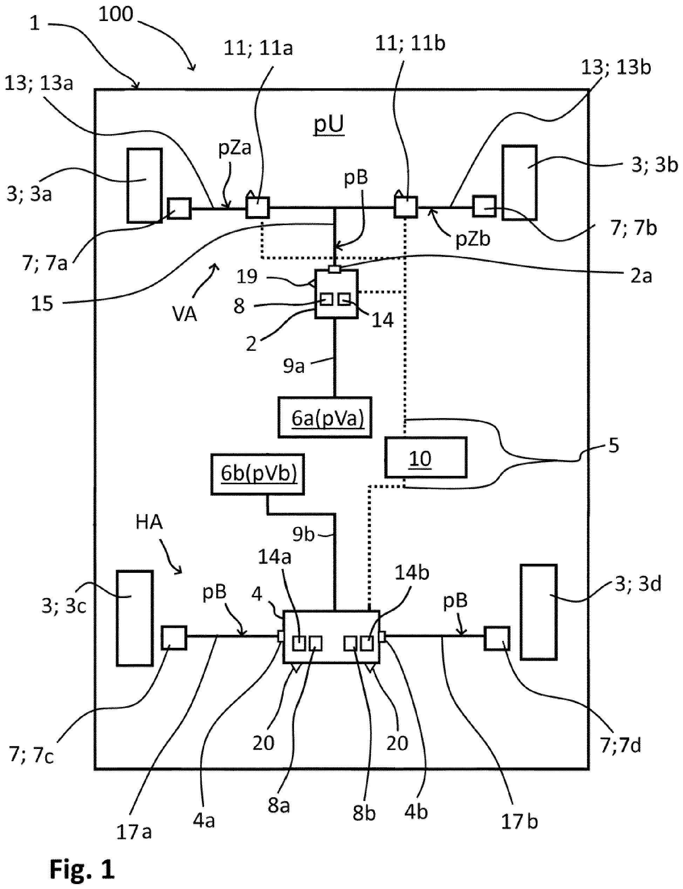

Figur 1 zeigt ein Fahrzeug 1 mit einem elektropneumatisch betriebenen Bremssystem, das mittels eines Steuergeräts 10 über elektrische Leitungen 5 gesteuert werden kann. Die Aussteuerung eines Bremsdruckes pB an Betriebsbremsen 7 von Rädern 3 an einer Vorderachse VA des Fahrzeuges 1, d.h. beispielsweise an eine linke Betriebsbremse 7a an dem linken Vorderrad 3a und an eine rechte Betriebsbremse 7b an dem rechten Vorderrad 3b, erfolgt über einen Vorderachs-Achsmodulator 2, welcher als Einkanal-Achsmodulator ausgebildet ist. Das heißt der vom Vorderachs-Achsmodulator 2 ausgesteuerte Bremsdruck pB wird an der Vorderachse VA ausgehend von einem Arbeitsanschluss 2a über eine sich verzweigende Druckleitung 15 an beide Betriebsbremsen 7a, 7b an der Vorderachse VA gleichermaßen ausgesteuert. Der vom Vorderachs-Achsmodulator 2 erzeugte Bremsdruck pB wird dabei durch eine bestimmte Bremsanforderung vorgegeben, wobei die Bremsanforderung automatisch (durch ein Assistenzsystem) oder manuell (durch den Fahrer) erzeugt werden kann.

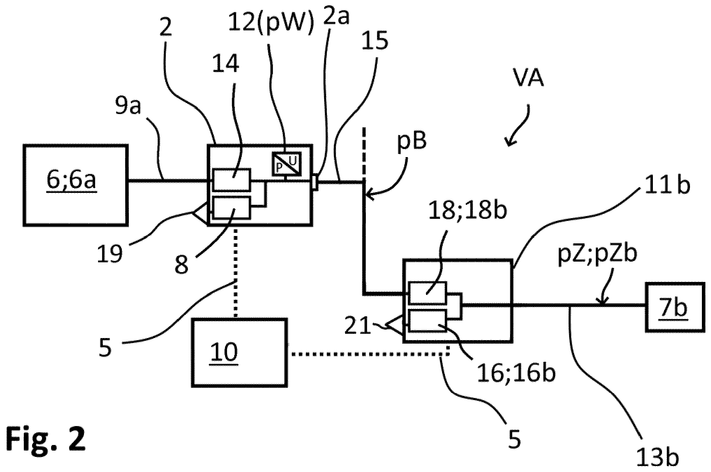

Zur Erzeugung des Bremsdruckes pB im Vorderachs-Achsmodulator 2 ist ein entsprechendes Achsmodulator-Einlassventil 14 und ein Achsmodulator-Auslassventil 8 vorgesehen, die bei entsprechender Ansteuerung in gewohnter Weise einen aus einem ersten Druckluftreservoir 6a über eine erste Zuleitung 9a bereitgestellten ersten Vorratsdruck pVa entsprechend moduliert als Bremsdruck pB in die Druckleitung 15 aussteuern kann. Der ausgesteuerte Bremsdruck pB kann über einen im Vorderachs-Achsmodulator 2 vor dem Arbeitsanschluss 2a angeordneten Drucksensor 12 gemessen werden, wie in Fig. 2 dargestellt. Auf diese Weise kann in der Druckleitung 15 eine Druckregelung erfolgen, bei der der vom Drucksensor 12 gemessene Bremsdruck pB in einem Ist-Soll-Abgleich (closed loop) entsprechend geregelt wird. Auf diese Weise kann eine gewünschte Bremswirkung eingestellt werden.

In der Druckleitung 15 ist zwischen dem Vorderachs-Achsmodulator 2 und den Betriebsbremsen 7a, 7b an dem jeweiligen Vorderrad 3a, 3b ein ABS-Ventil 11 angeordnet, d.h. ein linkes ABS-Ventil 11a und ein rechtes ABS-Ventil 11b. Jedes ABS-Ventil 11 weist in gewohnter Weise ein ABS-Einlassventil 18 und ein ABS-Auslassventil 16 (s. Fig. 2) auf, d.h. ein linkes ABS-Einlassventil 18a und ein linkes ABS-Auslassventil 16a am linken ABS-Ventil 11a und ein rechtes ABS-Einlassventil 18b und ein rechtes ABS-Auslassventil 16b am rechten ABS-Ventil 11b, um den über die Druckleitung 15 an die Betriebsbremsen 7a, 7b übertragenen Bremsdruck pB im Rahmen einer ABS-Regelung zu halten oder zu senken.

Eine Ansteuerung des jeweiligen ABS-Ventils 11 (ABS-Regelung) führt daher dazu, dass der in der Druckleitung 15 vorherrschende Bremsdruck pB zumindest kurzzeitig nicht mehr direkt an der jeweiligen Betriebsbremse 7a, 7b der Vorderachse VA anliegt, da die pneumatische Verbindung durch das ABS-Ventil 11 unterbrochen oder beeinflusst wird. In einem Zwischenabschnitt 13 (linker Zwischenabschnitt 13a, rechter Zwischenabschnitt 13b) der Druckleitung 15 zwischen dem jeweiligen ABS-Ventil 11 und der jeweiligen Betriebsbremse 7a, 7b an der Vorderachse VA herrscht daher ein Zwischendruck pZ vor, der nicht direkt mit dem Drucksensor 12 im Vorderachs-Achsmodulator 2 ermittelt bzw. gemessen werden kann. Da eine seitenindividuelle Ansteuerung der ABS-Ventile 11 erfolgen kann, kann dieser Zwischendruck pZ (linker Zwischendruck pZa, rechter Zwischendruck pZb) auch seitenweise variieren.

An der Hinterachse HA befindet sich eine linke Betriebsbremse 7c an dem linken Hinterrad 3c und eine rechte Betriebsbremse 7d an dem rechten Hinterrad 3d. Der Bremsdruck pB für die Betriebsbremsen 7c, 7d an den Hinterrädern 3c, 3d wird über einen Hinterachs-Achsmodulator 4, welcher als Mehrkanal-Achsmodulator ausgebildet ist, ausgesteuert. Das heißt der vom Hinterachs-Achsmodulator 4 ausgesteuerte Bremsdruck pB wird ausgehend von einem linken und einem rechten Arbeitsanschluss 4a, 4b des Hinterachs-Achsmodulators 4 individuell über eine linke und eine rechte Druckleitung 17a, 17b an die Betriebsbremsen 7c, 7d an den Hinterrädern 3c, 3d ausgesteuert. Der vom Hinterachs-Achsmodulator 4 erzeugte Bremsdruck pB wird dabei ebenfalls durch eine Bremsanforderung vorgegeben, im normalen Fahrbetrieb vorzugsweise durch dieselbe Bremsanforderung, die auch dem Vorderachs-Druckmodulator 2 vorgegeben wird.

Zur Erzeugung des Bremsdruckes pB im Hinterachs-Achsmodulator 4 sind entsprechende linke und rechte Achsmodulator-Einlassventile 14a, 14b und linke und rechte Achsmodulator-Auslassventile 8a, 8b vorgesehen, die bei entsprechender Ansteuerung jeweils einen aus einem zweiten Druckluftreservoir 6b über eine zweite Zuleitung 9b bereitgestellten zweiten Vorratsdruck pVb entsprechend individuell moduliert als Bremsdruck pB über den linken und rechten Arbeitsanschluss 4a, 4b des Hinterachs-Achsmodulators 4 in die linke bzw. rechte Druckleitung 17a, 17b aussteuern, wobei über das linke Achsmodulator-Einlassventil 14a und das linke Achsmodulator-Auslassventil 8a der Bremsdruck pB des linkten Bremszylinders 7c und über das rechte Achsmodulator-Einlassventil 14b und das rechte Achsmodulator-Auslassventil 8b der Bremsdruck pB des rechten Bremszylinders 7d moduliert wird. Der ausgesteuerte Bremsdruck pB kann über im Hinterachs-Achsmodulator 4 jeweils vor den Arbeitsanschlüssen 4a und 4b angeordnete linke bzw. rechte Drucksensoren 12a, 12b individuell gemessen werden. Auf diese Weise kann in der linken und rechten Druckleitung 17a, 17b eine individuelle Druckregelung erfolgen, bei der der von dem jeweiligen Drucksensor 12a, 12b gemessene Bremsdruck pB in einem Ist-Soll-Abgleich (closed loop) entsprechend geregelt wird. Auf diese Weise kann eine gewünschte Bremswirkung eingestellt werden.

Der Hinterachs-Achsmodulator 4 ist somit ein Mehrkanal Achsmodulator, mit einem ersten Kanal (linkes Einlassventil 14a, linker Arbeitsanschluss 4a, linkes Auslassventil 8a) und einem zweiten Kanal (rechtes Einlassventil 14b, rechter Arbeitsanschluss 4b, rechtes Auslassventil 8b). Über ein entsprechendes Öffnen und Schließen der Einlassventile 14a, 14b und Auslassventile 8a, 8b des Hinterachs-Achsmodulators 4 in Abhängigkeit von aufgenommenen Raddrehzahlen bzw. Radschlüpfen kann in dem Hinterachs-Achsmodulator 4 die Funktion eines ABS-Ventils integriert sein, wobei die Betriebsbremsen 7c, 7d an der Hinterachse HA dazu auch seitenindividuell unterschiedlich pneumatisch ansteuerbar sind.

Figur 2 zeigt schematisch nur die Vorderachse VA des beschriebenen Bremssystems 100, wobei lediglich der Abschnitt vom ersten Druckluftreservoir 6a über den Vorderachs-Achsmodulator 2 und dem rechten ABS-Ventil 11b zur rechten Betriebsbremse 7b dargestellt ist. Im Inneren des Vorderachs-Achsmodulators 2 ist der Drucksensor 12 derart angeordnet, dass unabhängig von der Stellung des Achsmodulator-Einlassventils 14 und des Achsmodulator-Auslassventils 8 von dem Drucksensor 12 im Vorderachs-Achsmodulator 2 ein Druckwert pW gemessen werden kann, der dem in der Druckleitung 15 an der Vorderachse VA zumindest bis zum rechten ABS-Ventil 11b vorherrschenden Bremsdruck pB entspricht bzw. diesen repräsentiert.

Das Achsmodulator-Einlassventil 14 und das Achsmodulator-Auslassventil 8 im Vorderachs-Achsmodulator 2 können wie hinreichend bekannt beide geschlossen werden, um den Vorderachs-Achsmodulator 2 in eine "Druckhalte-Stellung" PX1 zu bringen, in der der durch das erste Druckluftreservoir 6a bereitgestellte erste Vorratsdruck pVa nicht in die Druckleitung 15 an der Vorderachse VA ausgesteuert wird. Der Bremsdruck pB in der Druckleitung 15 an der Vorderachse VA wird dadurch gehalten. In einer "Druckabbau-Stellung" PX2 (Achsmodulator-Einlassventil 14 geschlossen und Achsmodulator-Auslassventil 8 geöffnet) wird die Druckleitung 15 hinter dem Arbeitsanschluss 2a des Vorderachs-Achsmodulators 2 entlüftet, wodurch sich der ausgesteuerte Bremsdruck pB reduziert bzw. an einen Umgebungsdruck pU annähert. In einer "Druckaufbau-Stellung" PX3 (Achsmodulator-Einlassventil 14 geöffnet und Achsmodulator-Auslassventil 8 geschlossen) lässt der Vorderachs-Achsmodulator 2 den durch das erste Druckluftreservoir 6a bereitgestellten ersten Vorratsdruck pVa ungehindert in die Druckleitung 15 hinter dem Arbeitsanschluss 2a des Vorderachs-Achsmodulators 2 durch, so dass sich der an der Vorderachse VA ausgesteuerte Bremsdruck pB erhöht.

Der Vorderachs-Achsmodulator 2 wird dabei durch die Steuereinheit (ECU) 10 über elektrische Steuerleitungen 5 angesteuert, um die jeweilige Stellung PX1, PX2, PX3 einzustellen.

Das rechte ABS-Ventil 11b an der Vorderachse VA weist durch eine gezielte Ansteuerung des rechten ABS-Einlassventils 18b und des rechten ABS-Auslassventils 16b vier Stellmöglichkeiten auf. In einer "Druckhalte-Stellung" PA1 sind das rechte ABS-Einlassventil 18b und das rechte ABS-Auslassventil 16b geschlossen, so dass der über den Arbeitsanschluss 2a des Vorderachs-Achsmodulators 2 ausgesteuerte Bremsdruck pB nicht in den rechten Zwischenabschnitt 13b ausgesteuert wird. Der rechte Zwischendruck pZb wird dadurch gehalten. In einer "Druckaufbau-Stellung" PA3 (rechtes ABS-Einlassventil 18b geöffnet und rechtes ABS-Auslassventil 16b geschlossen) lässt das rechte ABS-Ventil 11b den über den Arbeitsanschluss 2a des Vorderachs-Achsmodulators 2 ausgesteuerten Bremsdruck pB ungehindert in den rechten Zwischenabschnitt 13b und damit an die rechte Betriebsbremse 7b an dem rechten Vorderrad 3b durch. Der rechte Zwischendruck pZb kann sich also an den über den Arbeitsanschluss 2a des Vorderachs-Achsmodulators 2 ausgesteuerten Bremsdruck pB anpassen.

In einer ersten "Druckabbau-Stellung" PA2a (rechtes ABS-Einlassventil 18b geschlossen und rechtes ABS-Auslassventil 16b geöffnet) wird der rechte Zwischenabschnitt 13b über das rechte ABS-Auslassventil 16b entlüftet, wodurch sich der rechte Zwischendruck pZb reduziert bzw. an einen Umgebungsdruck pU annähert. In einer zweiten "Druckabbau-Stellung" PA2b (rechtes ABS-Einlassventil 18b geöffnet und rechtes ABS-Auslassventil 16b geöffnet), wird die Druckleitung 15 hinter dem Arbeitsanschluss 2a des Vorderachs-Achsmodulators 2 einschließlich des rechten Zwischenabschnitts 13b entlüftet, wodurch sich sowohl der rechte Zwischendruck pZb als auch der Bremsdruck pB reduzieren bzw. an einen Umgebungsdruck pU annähern, was in dem Fall von dem Drucksensor 12 im Vorderachs-Druckmodulator 2 auch gemessen werden kann. Die Ansteuerung des rechten ABS-Ventils 11b erfolgt über die Steuereinheit 10. In analoger Weise kann auch das linke ABS-Ventil 11a angesteuert werden, um die vier genannten Stellungen PA1, PA2a, PA2b, P3 in der jeweiligen Situation einstellen zu können.

Der in Figur 2 dargestellte Teil des Bremssystems 100 an der Vorderachse VA ist zur Durchführung sämtlicher der nachfolgend noch beschriebenen Ausführungsformen bzw. Schritte des erfindungsgemäßen Verfahrens geeignet, da das jeweilige ABS-Ventil 11a, 11b an der Vorderachse VA in die beschriebene zweite "Druckabbau-Stellung" PA2b gebracht werden kann.

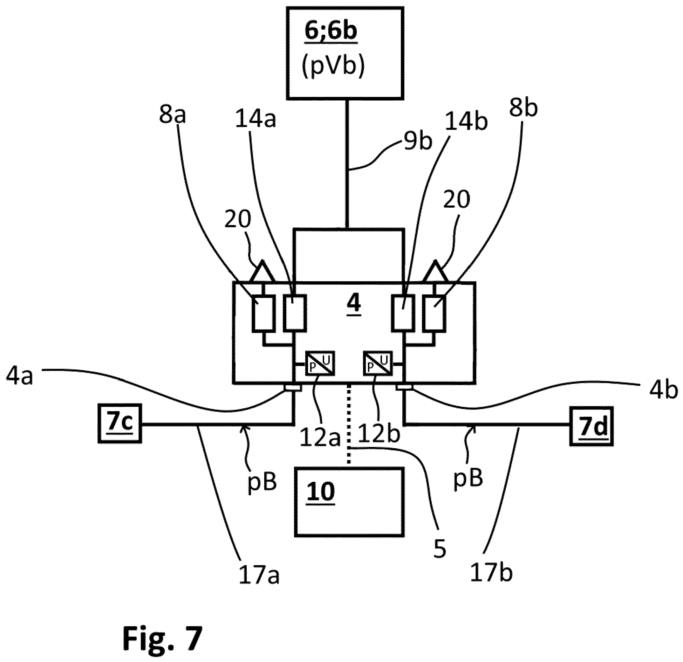

Figur 7 zeigt schematisch nur die Hinterachse HA des Bremssystems 100, wobei der Abschnitt vom zweiten Druckluftreservoir 6b über den Mehrkanal Hinterachs-Achsmodulator 4 zu den Betriebsbremsen 7c und 7d an der Hinterachse HA dargestellt ist. Der Mehrkanal Hinterachs-Achsmodulator 4 ist charakterisiert durch den ersten Kanal, gebildet durch das linke Achsmodulator-Einlassventil 14a, den linken Arbeitsanschluss 4a und das linke Achsmodulator-Auslassventil 8a, welcher über die linke Druckleitung 17a die linke Betriebsbremse 7c an der Hinterachse HA pneumatisch ansteuert und den zweiten Kanal, gebildet durch das rechte Achsmodulator-Einlassventil 14b, den rechten Arbeitsanschluss 4b und das rechte Achsmodulator-Auslassventil 8b, welcher über die rechte Druckleitung 17b die rechte Betriebsbremse 7d an der Hinterachse HA ansteuert.

Im Inneren des Hinterachs-Achsmodulators 4 sind der linke und rechte Drucksensor 12a, 12b derart angeordnet, dass unabhängig von der Stellung des linken bzw. rechten Achsmodulator-Einlassventils 14a, 14b und des linken bzw. rechten Achsmodulator-Auslassventils 8a, 8b von dem jeweiligen Drucksensor 12a, 12b in dem jeweiligen Kanal ein individueller Druckwert pW gemessen werden kann, der dem in der linken bzw. rechten Druckleitung 17a, 17b an der Hinterachse HA vorherrschenden Bremsdruck pB entspricht.

Mögliche Stellungen PX1, PX2, PX3 des Mehrkanal Hinterachs-Achsmodulators 4 entsprechen hierbei den Stellungen PX1, PX2, PX3 des Einkanal Vorderachs-Achsmodulators 2 aus Fig. 2, nur mit dem Unterschied, dass eine seitenweise unabhängige Ansteuerung (je Kanal) möglich ist. Auch der Hinterachs-Achsmodulator 4 wird durch die Steuereinheit (ECU) 10 über elektrische Steuerleitungen 5 angesteuert.

Der in Figur 7 dargestellte Teil des Bremssystems 100 an der Hinterachse HA ist zur Durchführung zumindest einiger der nachfolgend noch beschriebenen Ausführungsformen bzw. Schritte des erfindungsgemäßen Verfahrens geeignet.

Im Rahmen von gewissen Assistenzfunktionen, beispielweise Steer-by-brake, ESP, o.ä., ist eine Kenntnis über die Luftströmungswiderstände vorteilhaft, um den aktuellen Zustand des pneumatischen Systems besser einschätzen zu können. Die in den Druckleitungen 15, 17a, 17b und pneumatischen Komponenten des Bremssystems 100 auftretenden Luftströmungswiderstände können dabei richtungsabhängig sein, beispielsweise aufgrund von Drosseln und Engstellen, welche je nach Strömungsrichtung unterschiedlich zum gesamten Luftströmungswiderstand beitragen. Der Hintergrund ist, dass die Luft in einem individuellen Strömungspfad Pi innerhalb des Bremssystems 100 einem bestimmten Luftströmungswiderstand ausgesetzt ist, der insbesondere abhängig ist von einer Oberflächenrauigkeit der verbauten Komponenten im jeweiligen Strömungspfad Pi, von Drosseln im jeweiligen Strömungspfad Pi, von Volumengrößen des jeweiligen Strömungspfades Pi, von Rohrlängen der beteiligten Druckleitungen 15, 17a, 17b , der Strömungsrichtung der Luft und weiteren Einflüssen, die in dem jeweiligen Strömungspfad Pi auf die Luft einwirken.

Im Folgenden werden daher verschiedene Strömungspfade Pi (i=1, 2, 3, 4, 5, 6) betrachtet, die im Betrieb des Bremssystems 100 je nach Ansteuerung der pneumatischen Komponenten von der Luft durchströmt werden, wobei die jeweils betrachteten Strömungspfade Pi in den nachfolgend beschriebenen Figuren jeweils als gestrichelte Linien schematisiert dargestellt sind. Mittels verschiedener Ausführungsformen des Verfahrens lassen sich pfadindividuelle Strömungswiderstandskenngrößen RLi (i=1, 2, 3, 4, 5, 6) ermitteln, die den Luftströmungswiderstand in dem jeweiligen Strömungspfad Pi charakterisieren bzw. welche einen Rückschluss auf den Luftströmungswiderstand in dem jeweiligen Strömungspfad Pi erlauben.

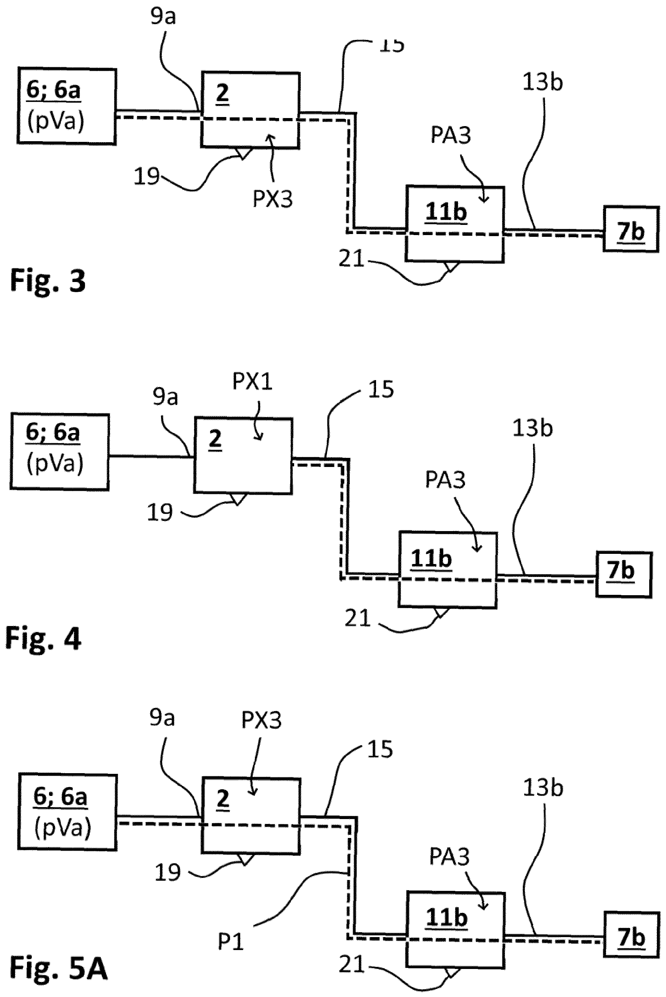

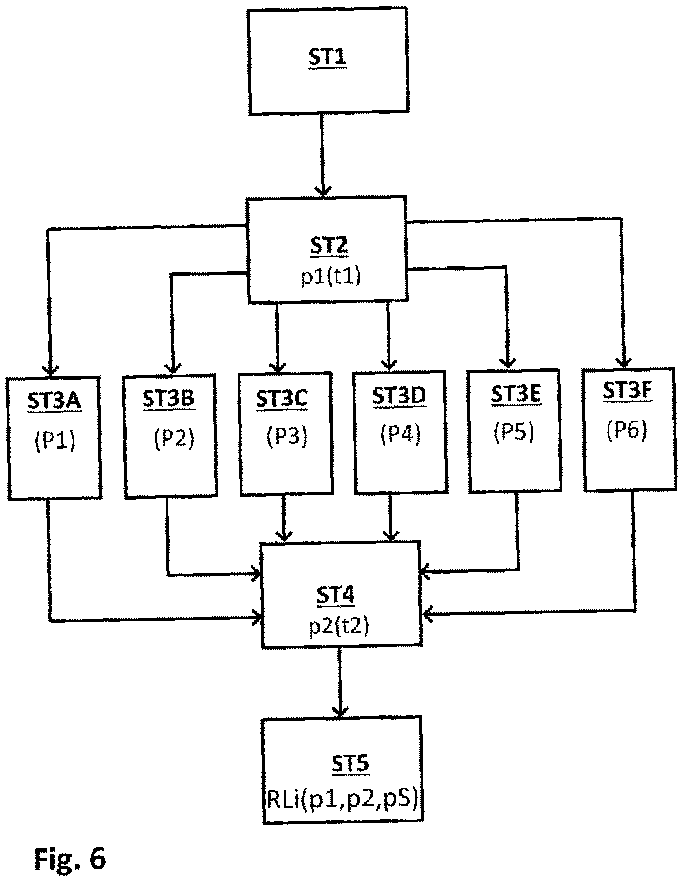

Das in Fig. 6 dargestellte Verfahren zur Bestimmung einer solchen Strömungswiderstandskenngröße RLi wird nachfolgend beispielhaft anhand der Figuren 3, 4, 5A, 5B, 5C, 5D für unterschiedliche Strömungspfade Pi (i= 1, 2, 3, 4, 5, 6) an der Vorderachse VA des Fahrzeuges 1, d.h. mit ABS-Ventilen 11; 11a, 11b in der Druckleitung 15, oder an der Hinterachse HA, d.h. ohne ABS-Ventile 11, näher erläutert. In den vorgenannten Figuren sind dabei beispielhaft nur der rechte Teil der Vorderachse VA bzw. der Hinterachse HA darstellt (vergleichbar zur Fig. 2 bzw. 7):

Figur 3 zeigt einen Befüllungsschritt ST1 des Verfahrens zur Bestimmung einer Strömungswiderstandskenngröße RLi. Im Befüllungsschritt ST1 wird die Druckleitung 15 der Vorderachse VA des Bremssystems 100 zumindest zeitweise mit Druckluft aus dem ersten Druckluftreservoir 6a befüllt, wobei der Vorderachs-Achsmodulator 2 dazu in die "Druckaufbau-Stellung" PX3 und das rechte ABS-Ventil 11b ebenfalls in die "Druckaufbau-Stellung" PA3 gebracht werden, so dass der am Arbeitsanschluss 2a des Vorderachs-Achsmodulator 2 ausgesteuerte Bremsdruck pB über die Druckleitung 15 einschließlich des rechten Zwischenabschnitts 13b an der rechten Betriebsbremse 7b des rechten Vorderrades 3b wirkt.

Der Befüllungsschritt ST1 muss kein gesonderter Verfahrensschritt sein, sondern kann auch aus dem Betrieb des Bremssystems heraus erfolgen, beispielsweise dann, wenn die Druckleitung 15 bzw. der rechte Zwischenabschnitt 13b an der Vorderachse aufgrund einer (automatischen oder manuellen) Bremsanforderung mit einem entsprechend modulierten Bremsdruck pB aus dem ersten Druckluftreservoir 6a beaufschlagt wird. Mit dem Befüllungsschritt ST1 wird also bezweckt, dass durch eine gezielte Einstellung der jeweiligen "Druckaufbau-Stellungen" PX3, PA3 in der Druckleitung 15 an der Vorderachse VA zur rechten Betriebsbremse 7b des rechten Vorderrades 3b ein Bremsdruck pB vorherrscht, der höher ist als ein Umgebungsdruck pU. Wie nachfolgend noch erläutert, ist der Befüllungsschritt ST1 in einigen Ausführungen des Verfahrens optional.

Figur 4 zeigt einen ersten Aufzeichnungsschritt ST2, bei dem als Druckwert pW ein erster Druckwert p1 mittels des im Vorderachs-Achsmodulator 2 (siehe auch Fig. 2) angeordneten Drucksensors 12 aufgezeichnet wird, während der Vorderachs-Achsmodulator 2 druckleitend über die Druckleitung 15 mit der rechten Betriebsbremse 7b an dem rechten Vorderrad 3b verbunden ist. Der Vorderachs-Achsmodulator 2 ist dabei in die "Druckhalte-Stellung" PX1 und das rechte ABS-Ventil 11b in die "Druckaufbau-Stellung" PA3 gebracht. In dem ersten Aufzeichnungsschritt ST2 wird also ein erster Druckwert p1 gemessen, der sich zwischen dem Vorderachs-Achsmodulator 2 und der rechten Betriebsbremse 7b am rechten Vorderrad 3b einstellt. Ausgehend davon sind die folgenden Druckimpulsschritte ST3 vorgesehen:

Figur 5A zeigt einen ersten Druckimpulsschritt ST3A für einen ersten Strömungspfad P1. Der erste Strömungspfad P1 umfasst dabei die Druckleitung 15 einschließlich des rechten Zwischenabschnitts 13b, das rechte ABS-Ventil 11b, eine erste Zuleitung 9a zwischen dem ersten Druckluftreservoir 6a und dem Vorderachs-Achsmodulator 2, sowie pneumatische Komponenten innerhalb der rechten Betriebsbremse 7b am rechten Vorderrad 3b und innerhalb des Vorderachs-Achsmodulators 2, insbesondere das Achsmodulator-Einlassventil 14. In dem ersten Druckimpulsschritt ST3A wird zu einem ersten Zeitpunkt t1 ein Druckimpuls in der Druckleitung 15 durch Einstellen der "Druckaufbau-Stellung" PX3 des Vorderachs-Achsmodulators 2 erzeugt, wobei auch das rechte ABS-Ventil 11b unverändert in der "Druckaufbau-Stellung" PA3 verbleibt. In dem ersten Druckimpulsschritt ST3A findet somit eine weitere Erhöhung des vom Arbeitsanschluss 2a des Vorderachs-Achsmodulators 2 ausgesteuerten Bremsdrucks pB statt, welcher sich von hier aus entlang der Druckleitung 15 an der Vorderachse VA über das rechte ABS-Ventil 11b in den rechten Zwischenabschnitt 13b bis zur rechten Betriebsbremse 7b ausbreitet.

Analog gelten diese Ausführungen für den linken Teil des Bremssystems 100 an der Vorderachse VA.

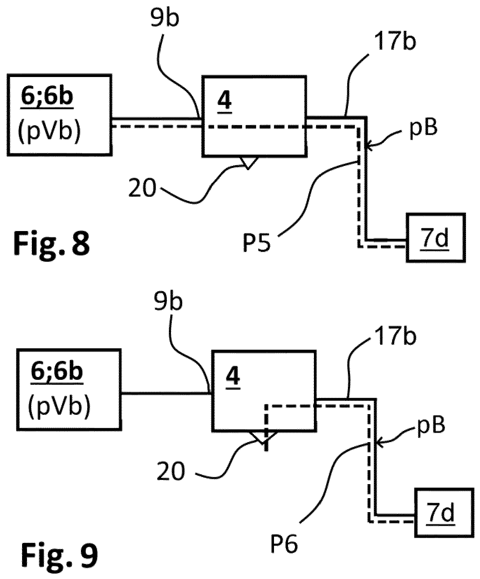

Figur 8 zeigt analog dazu einen fünften Druckimpulsschritt ST3E für einen fünften Strömungspfad P5, wobei es sich wie in Figur 7 gezeigt um einen Druckimpuls in der rechten Druckleitung 17b des rechten Kanals des Hinterachs-Druckmodulators 4 handelt, in welcher kein ABS-Ventil angeordnet ist. Der fünfte Strömungspfad P5 umfasst demnach die rechte Druckleitung 17b, eine zweite Zuleitung 9b zwischen dem zweiten Druckluftreservoir 6b und dem Hinterachs-Achsmodulator 4, sowie pneumatische Komponenten innerhalb der rechen Betriebsbremse 7d an dem rechten Hinterrad 3d und innerhalb des Hinterachs-Achsmodulators 4, insbesondere das rechte Achsmodulator-Einlassventil 14b. Das Erzeugen des Druckimpulses erfolgt ansonsten analog zum in Figur 5A an der Vorderachse VA beschriebenen Ablauf, indem die "Druckaufbau-Stellung" PX3 des Hinterachs-Achsmodulators 4 für den jeweiligen Kanal eingestellt wird. Analog gelten diese Ausführungen für den linken Teil des Bremssystems 100 an der Hinterachse HA, d.h. den anderen Kanal des Hinterachs-Achsmodulators 4.

Vor dem ersten und fünften Druckimpulsschritt ST3A, ST3E ist der Befüllungsschritt ST1 optional, da sich durch den Druckimpuls der Bremsdruck pB in der jeweiligen Druckleitung 15, 17a, 17b auf jeden Fall erhöhen kann, was auch ausgehend vom Umgebungsdruck pU geschehen kann.

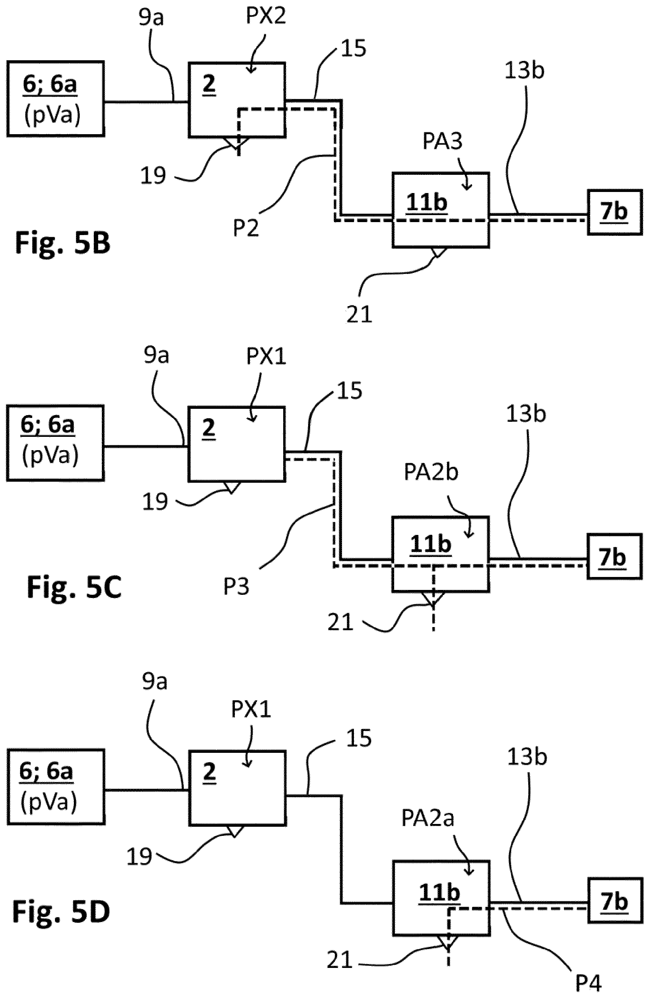

Figur 5B zeigt einen zweiten Druckimpulsschritt ST3B für einen zweiten Strömungspfad P2. Der zweite Strömungspfad P2 umfasst dabei die Druckleitung 15 an der Vorderachse VA einschließlich des rechten Zwischenabschnitts 13b, das rechte ABS-Ventil 11b, sowie pneumatische Komponenten innerhalb der rechten Betriebsbremse 7b am rechten Vorderrad 3b und innerhalb des Vorderachs-Achsmodulators 2, insbesondere das Achsmodulator-Auslassventil 8 sowie einen Vorderachs-Achsmodulator-Auslass 19, durch den Luft entweichen kann. In dem zweiten Druckimpulsschritt ST3B wird zu einem ersten Zeitpunkt t1 ein Druckimpuls in der Druckleitung 15 der Vorderachse VA einschließlich des rechten Zwischenabschnitts 13b durch Einstellen der "Druckabbau-Stellung" PX2 des Vorderachs-Achsmodulators 2 erzeugt, wobei das rechte ABS-Ventil 11b unverändert in der "Druckaufbau-Stellung" PA3 verbleibt. In dem zweiten Druckimpulsschritt ST3B findet somit bei diesem Ausführungsbeispiel eine Verringerung des vom Arbeitsanschluss 2a des Vorderachs-Achsmodulators 2 ausgesteuerten Bremsdrucks pB statt, so dass Luft von der rechten Betriebsbremse 7b über den rechten Zwischenabschnitt 13b, das rechte ABS-Ventil 11b entlang der Druckleitung 15 und über den Arbeitsanschluss 2a des Vorderachs-Achsmodulators 2 durch diesen hindurch in den Vorderachs-Achsmodulator-Auslass 19 strömt.

Figur 9 zeigt analog dazu einen sechsten Druckimpulsschritt ST3F für einen sechsten Strömungspfad P6, wobei es sich wie in Figur 7 gezeigt um einen Druckimpuls in der rechten Druckleitung 17b des rechten Kanals des Hinterachs-Druckmodulators 4 an der Hinterachse HA handelt, in welcher kein ABS-Ventil angeordnet ist. Der sechste Strömungspfad P6 umfasst demnach die rechte Druckleitung 17b sowie pneumatische Komponenten innerhalb der rechen Betriebsbremse 7d an dem rechten Hinterrad 3d und innerhalb des Hinterachs-Achsmodulators 4, insbesondere das rechte Achsmodulator-Auslassventil 8b und einen Hinterachs-Achsmodulator-Auslass 20, durch den Luft entweichen kann. Das Erzeugen des Druckimpulses erfolgt ansonsten analog zum in Figur 5B an der Vorderachse VA beschriebenen Ablauf, indem die "Druckabbau-Stellung" PX2 des Hinterachs-Achsmodulators 4 für den jeweiligen Kanal eingestellt wird. Analog gelten diese Ausführungen für den linken Teil des Bremssystems 100 an der Hinterachse HA, d.h. den anderen Kanal des Hinterachs-Achsmodulators 4.

Figur 5C zeigt einen dritten Druckimpulsschritt ST3C für einen dritten Strömungspfad P3. Der dritte Strömungspfad P3 umfasst dabei die Druckleitung 15 an der Vorderachse VA einschließlich des rechten Zwischenabschnitts 13b, das rechte ABS-Ventil 11b, insbesondere das ABS-Auslassventil 16b, das ABS-Einlassventil 18b und einen ABS-Ventil-Auslass 21, sowie pneumatische Komponenten innerhalb der rechten Betriebsbremse 7b am rechten Vorderrad 3b.

In dem dritten Druckimpulsschritt ST3C wird zu einem ersten Zeitpunkt t1 ein Druckimpuls in der Druckleitung 15 und dem rechten Zwischenabschnitt 13b durch Einstellen der zweiten "Druckabbau-Stellung" PA2b des rechten ABS-Ventils 11b erreicht, wobei der Vorderachs-Achsmodulator 2 in der Druckhalte-Stellung PX1 verbleibt. Es findet somit bei diesem dritten Druckimpulsschritt ST3C eine Verringerung des Bremsdruckes pB in der Druckleitung 15 an der Vorderachse VA und des Zwischendruckes pZb in der rechten Zwischenleitung 13b statt, d.h. Druckluft strömt vom Arbeitsanschluss 2a des Vorderachs-Achsmodulators 2 sowie von der rechten Betriebsbremse 7b aus in Richtung des rechten ABS-Ventils 11b und darin durch den ABS-Ventil-Auslass 21 in die Umgebung.

Figur 5D zeigt einen vierten Druckimpulsschritt ST3D für einen vierten Strömungspfad P4. Der vierte Strömungspfad P4 umfasst dabei den rechten Zwischenabschnitt 13b, das rechte ABS-Ventil 11b, insbesondere das ABS-Auslassventil 16b und den ABS-Ventil-Auslass 21, sowie pneumatische Komponenten innerhalb der rechten Betriebsbremse 7b am rechten Vorderrad 3b.

In dem vierten Druckimpulsschritt ST3D wird zu einem ersten Zeitpunkt t1 ein Druckpuls im rechten Zwischenabschnitt 13b durch Einstellen der ersten "Druckabbau-Stellung" PA2a des rechten ABS-Ventils 11b erreicht. Es findet somit beim vierten Druckimpulsschritt ST3D im Gegensatz zum dritten Druckimpulsschritt ST3C nur eine Verringerung des rechten Zwischendrucks pZb in der rechten Zwischenleitung 13b statt, d.h. Druckluft strömt von der rechten Betriebsbremse 7b aus in Richtung des rechten ABS-Ventils 11b und darin durch den ABS-Ventil-Auslass 21 in die Umgebung. Der Vorderachs-Achsmodulator 2 verbleibt dabei in der "Druckhalte-Stellung" PX1.

Die in Figur 5C und 5D dargestellte Anordnung und Ventilstellung zum Erzeugen eines Druckimpulses ist ausschließlich an der Vorderachse VA des dargestellten Bremssystems 100 möglich, d.h. wenn neben dem Vorderachs-Achsmodulator 2 auch ein zusätzliches ABS-Ventil 11 vorgesehen ist. An der Hinterachse HA des in Fig. 1 dargestellten Bremssystems 100 lassen sich der dritte und der vierte Druckimpulsschritt ST3C, ST3D daher nicht durchführen, da die dritten und vierten Strömungspfade P3, P4 an der Hinterachse HA nicht vorhanden sind.

Im Anschluss an den jeweiligen Druckimpulsschritt ST3A, ST3B, ST3C, ST3D, ST3E, ST3F erfolgt zu einem zweiten Zeitpunkt t2 ein zweiter Aufzeichnungsschritt ST4, bei dem als Druckwert pW ein zweiter Druckwert p2 mittels des im jeweiligen Achsmodulator 2, 4 (siehe auch Fig. 2, 7) angeordneten Drucksensors 12, 12a, 12b aufgezeichnet wird. Wie auch im ersten Aufzeichnungsschnitt ST2 wird im zweiten Aufzeichnungsschritt ST4 ein zweiter Druckwert p2 gemessen, der sich zwischen dem jeweiligen Achsmodulator 2, 4 und der jeweiligen Betriebsbremse 7 einstellt. Dazu werden der Vorderachs-Achsmodulator 2 in die "Druckhalte-Stellung" PX1 und das rechte ABS-Ventil 11b in die "Druckaufbau-Stellung" PA3 gebracht. Wichtig ist hierbei, dass zwischen dem Erzeugen des jeweiligen Druckimpulses zum Zeitpunkt t1 und dem zweiten Zeitpunkt t2 nicht zu viel Zeit vergeht, beispielsweise zwischen 50ms und 100ms, da sich die Bremsdrücke pB in der jeweiligen Druckleitung 15, 17a, 17b ansonsten vollständig angleichen können, was das nachfolgende Ergebnis unter Umständen verfälscht.

Anschließend wird in einem Bestimmungsschritt ST5 eine dem jeweiligen Strömungspfad Pi, der in dem jeweiligen Druckimpulsschritt ST3A, ST3B, ST3C, ST3D, ST3E, ST3F mit einem Druckimpuls "beaufschlagt" wurde, zugeordnete Strömungswiderstandskenngröße RLi in Abhängigkeit des zeitlichen Verlaufs des Bremsdruckes pB zwischen dem ersten Druckwert p1, der zum ersten Zeitpunkt t1 unmittelbar vor dem Erzeugen des Druckimpulses noch vorliegt, und dem zweiten Druckwert p2 zum zweiten Zeitpunkt t2 aus dem folgenden Zusammenhang bestimmt: $RLi ∼ \frac{dp}{dt}$

Im Falle der oben beschriebenen diskreten Aufzeichnung von Druckwerten p1, p2 zu den jeweiligen Zeitpunkten t1, t2 ergibt sich der vereinfachte Zusammenhang: $RLi ∼ \frac{dp}{dt} = \frac{p 2 - p 1}{t 2 - t 1}$

Daraus lässt sich eine Strömungswiderstandskenngröße RLi für den jeweiligen Strömungspfad Pi auf unterschiedliche Weise ermitteln. Im einfachsten Fall können die beiden Zeitpunkte t1, t2 festgelegt werden, beispielsweise zwischen 50ms und 100ms voneinander zeitlich beabstandet, und dann die entsprechend vor dem jeweiligen Druckimpuls (t1) und nach dem jeweiligen Druckimpuls (t2) vorliegenden Druckwerte p1, p2 im jeweiligen Aufzeichnungsschritt ST2, ST4 gemessen werden. Aus dem o.g. Zusammenhang folgt dann die Strömungswiderstandskenngröße RLi als Maß für den Strömungswiderstand, z.B. aus $RLi = \frac{p 2 - p 1}{t 2 - t 1}$ ggf. skaliert mit einem zusätzlichen Faktor.

Alternativ können auch die Zeitpunkte t1, t2 und der erste Druckwert p1 vorgegeben werden, wobei der erste Druckwert p1 in dem Befüllungsschritt ST1 gezielt eingestellt wird. In dem Fall verändert sich nur der zum zweiten Zeitpunkt t2 gemessene zweite Druckwert p2 in Abhängigkeit des Strömungswiderstandes, und zwar beeinflusst durch die Charakteristik des jeweiligen Strömungspfades Pi. Unter Berücksichtigung der Tatsache, dass die Parameter t1, t2, p1 der o.g. Formel festgelegt und bekannt sind, kann also in diesem speziellen Fall der variable zweite Druckwert p2 selbst als eine Strömungswiderstandskenngröße RLi, d.h. ein Maß für den Strömungswiderstand, angenommen werden.

Eine andere Möglichkeit besteht darin, dass bei einem fest vorgegebenen ersten Druckwert p1 ein definierter Druckimpuls zu dem ersten Zeitpunkt t1 erzeugt wird, und ein Zeitraum bzw. ein zweiter Zeitpunkt t2 bestimmt wird, bis sich bzw. zu dem sich der Druckwert pW an einen fest vorgegebenen Vorgabe-Druckwert pS angeglichen hat. Der Druckwert pW wird also während des jeweiligen Druckimpulsschritts ST3A, ST3B, ST3C, ST3D, ST3E, ST3F fortlaufend überwacht bis der Druckwert pW zu dem zu bestimmenden zweiten Zeitpunkt t2 den Vorgabe-Druckwert pS als zweiten Druckwert p2 erreicht hat. In diesem speziellen Fall sind die Parameter t1, p1, p2 der o.g. Formel festgelegt und bekannt und der variable zweite Zeitpunkt t2 kann selbst als eine Strömungswiderstandskenngröße RLi, d.h. ein Maß für den Strömungswiderstand, angenommen werden.

Daher kann auf eine Alterung der Druckleitungen oder der pneumatischen Komponenten oder auf sonstige Beeinträchtigungen im Strömungsverhalten geschlossen werden, wenn sich entweder der zweite Druckwert p2 nach dem vorbestimmten zweiten Zeitpunkt t2 gegenüber vorherigen Messungen verändert, oder wenn sich der zweite Zeitpunkt t2 bis zum Erreichen eines vorbestimmten zweiten Druckwerts p2 bzw. Vorgabe-Druckwertes pS gegenüber vorherigen Messungen verändert.

Ergänzend dazu kann der zweite Zeitpunkt t2 als variabler Parameter auch derartig festgelegt werden, dass dieser zweite Zeitpunkt t2 erreicht ist, wenn sich der vom jeweiligen Drucksensor 12, 12a, 12b nach dem Beaufschlagen mit dem jeweiligen Druckimpuls gemessene Druckwert pW nicht mehr ändert bzw. innerhalb einer Toleranz konstant bleibt. Der zweite Druckwert p2 ist dann spezifisch für den jeweiligen Druckimpuls und kann durch eine zeitliche Betrachtung (z.B. mathematische Ableitung) des gemessenen Druckwertes pW (bleibt dieser innerhalb der Toleranz gleich) ermittelt werden. Dabei wird angenommen, dass sich der Zeitraum, innerhalb dessen in dem jeweiligen Strömungspfad Pi ein Druckausgleich (konstant bleibender Bremsdruck pB) stattfindet (in dem Fall Zeitraum zwischen t1 und t2), abhängig ist von dem Strömungswiderstand im jeweiligen Strömungspfad Pi, so dass auch dieser Zeitraum, der durch den variablen zweiten Zeitpunkt t2 gegeben ist, ein Maß für den Strömungswiderstand ist.

### Bezugszeichenliste (Teil der Beschreibung)

- 1: Fahrzeug
- 2: Vorderachs-Achsmodulator (Einkanal)
- 2a: Arbeitsanschluss des Vorderachs-Achsmodulators 2
- 3: Rad
- 3a: linkes Vorderrad
- 3b: rechtes Vorderrad
- 3c: linkes Hinterrad
- 3d: rechtes Hinterrad
- 4: Hinterachs-Achsmodulator (Mehrkanal)
- 4a: linker Arbeitsanschluss des Hinterachs-Achsmodulators 4
- 4b: rechter Arbeitsanschluss des Hinterachs-Achsmodulator 4
- 5: elektrische Steuerleitungen
- 6a: erstes Druckluftreservoir
- 6b: zweites Druckluftreservoir
- 7: Betriebsbremse
- 7a: Betriebsbremse am linken Vorderrad 3a
- 7b: Betriebsbremse am rechten Vorderrad 3b
- 7c: Betriebsbremse am linken Hinterrad 3c
- 7d: Betriebsbremse am rechten Hinterrad 3d
- 8: Achsmodulator-Auslassventil des Vorderachs-Achsmodulators 2
- 8a: linkes Achsmodulator-Auslassventil des Hinterachs-Achsmodulators 4
- 8b: rechtes Achsmodulator-Auslassventil des Hinterachs-Achsmodulators 4
- 9a: erste Zuleitung
- 9b: zweite Zuleitung
- 10: ECU
- 11: ABS-Ventil
- 11a: linkes ABS-Ventil
- 11b: rechtes ABS-Ventil
- 12: Drucksensor
- 12a: linker Drucksensor
- 12b: rechter Drucksensor
- 13: Zwischenabschnitt
- 13a: linker Zwischenabschnitt
- 13b: rechter Zwischenabschnitt
- 14: Achsmodulator-Einlassventil des Vorderachs-Achsmodulators 4
- 14a: linkes Achsmodulator-Einlassventil des Hinterachs-Achsmodulators 4
- 14b: rechtes Achsmodulator-Einlassventil des Hinterachs-Achsmodulators 4
- 15: Druckleitung der Vorderachse VA
- 16: ABS-Auslassventil
- 16a: linkes ABS-Auslassventil
- 16b: rechtes ABS-Auslassventil
- 17a: linke Druckleitung der Hinterachse HA
- 17b: rechte Druckleitung der Hinterachse HA
- 18: ABS-Einlassventil
- 18a: linkes ABS-Einlassventil
- 18b: rechtes ABS-Einlassventil
- 19: Vorderachs-Achsmodulator-Auslass
- 20: Hinterachs-Achsmodulator-Auslass
- 21: ABS-Ventil-Auslass
- 100: Bremssystem
- HA: Hinterachse
- PA1: Druckhalte-Stellung des ABS-Ventils 11
- PA2a: erste Druckabbau-Stellung des ABS-Ventils 11
- PA2b: zweite Druckabbau-Stellung des ABS-Ventils 11
- PA3: Druckaufbau-Stellung des ABS-Ventils 11
- pB: Bremsdruck
- pS: Vorgabe-Druckwert
- pU: Umgebungsdruck
- pVa: erster Vorratsdruck
- pVb: zweiter Vorratsdruck
- pW: Druckwert
- PX1: Druckhalte-Stellung des Achsmodulators 2, 4
- PX2: Druckabbau-Stellung der Achsmodulators 2, 4
- PX3: Druckaufbau-Stellung der Achsmodulators 2, 4
- pZ: Zwischendruck
- pZa: linker Zwischendruck
- pZb: rechter Zwischendruck
- Pi: Strömungspfad i, i= 1, 2, 3, 4, 5, 6
- p1: erster Druckwert
- p2: zweiter Druckwert
- RLi: Strömungswiderstandskenngröße
- t1: erster Zeitpunkt
- t2: zweiter Zeitpunkt
- VA: Vorderachse
- ST1: Befüllungsschritt
- ST2: erster Aufzeichnungsschritt
- ST3A: erster Druckimpulsschritt
- ST3B: zweiter Druckimpulsschritt
- ST3C: dritter Druckimpulsschritt
- ST3D: vierter Druckimpulsschritt
- ST3E: fünfter Druckimpulsschritt
- ST3F: sechster Druckimpulsschritt
- ST4: zweiter Aufzeichnungsschritt
- ST5: Bestimmungsschritt

## Patentansprüche

1. Verfahren zur Bestimmung einer Strömungswiderstandskenngröße (RLi) in einem elektropneumatischen Bremssystem (100) eines Fahrzeugs (1), wobei das Bremssystem (100) mindestens aufweist:
- einen Achsmodulator (2, 4) mit
-- einem Achsmodulator-Einlassventil (14, 14a, 14b) zur Druckbeaufschlagung einer an mindestens einem Arbeitsanschluss (2a, 4a, 4b) des Achsmodulators (2, 4) angeschlossenen Druckleitung (15, 17a, 17b) mit Druckluft aus einem über eine Zuleitung (9a, 9b) an den Achsmodulator (2, 4) angeschlossenen Druckluftreservoir (6a, 6b),
-- einem Achsmodulator-Auslassventil (8, 8a, 8b) zur Entlüftung der Druckleitung (15, 17a, 17b) über einen Achsmodulator-Auslass (19, 20), und
-- einem Drucksensor (12, 12a, 12b), der ausgebildet ist, einen der jeweiligen Druckleitung (15, 17a, 17b) zugeordneten Druckwert (pW) zu ermitteln; und
- mindestens eine an die Druckleitung (15, 17a, 17b) angeschlossene Betriebsbremse (7),
umfassend die folgenden Schritte,
- Ermitteln eines ersten Druckwertes (p1) mittels des Drucksensors (12, 12a, 12b) des Achsmodulators (2, 4), während der Achsmodulator (2, 4) über den Arbeitsanschluss (2a, 4a, 4b) über die Druckleitung (15, 17a, 17b) mit der mindestens einen Betriebsbremse (7) druckleitend verbunden ist und der Achsmodulator (2, 4) in eine Druckhalte-Stellung (PX1) gebracht ist (ST2);
- Erzeugen eines Druckimpulses in der Druckleitung (15, 17a, 17b) zu einem ersten Zeitpunkt (t1) (ST3A, ST3B, ST3C, ST3D, ST3E, ST3F);
- Ermitteln eines zweiten Druckwerts (p2) mittels des Drucksensors (12, 12a, 12b) des Achsmodulators (2, 4) zu einem zweiten Zeitpunkt (t2) nach dem Erzeugen des Druckimpulses (ST4); und
- Bestimmen einer Strömungswiderstandskenngröße (RLi) für einen Strömungspfad (Pi) innerhalb des Bremssystems (100), in dem sich der erzeugte Druckimpuls ausbreitet, in Abhängigkeit einer zeitlichen Veränderung des zweiten Druckwerts (p2) gegenüber dem ersten Druckwert (p1).

2. Verfahren nach Anspruch 1, wobei der Druckimpuls durch Einstellen einer Druckaufbau-Stellung (PX3) des Achsmodulators (2, 4) und/oder durch Öffnen eines Achsmodulator-Einlassventils (14, 14a, 14b) bei gleichzeitig geschlossenem Achsmodulator-Auslassventil (8, 8a, 8b) erzeugt wird (ST3A, ST3E).

3. Verfahren nach Anspruch 2, wobei der Druckimpuls dadurch durch einen ersten Strömungspfad (P1) oder einen fünften Strömungspfad (P5) geleitet wird, der die an den jeweiligen Achsmodulator (2, 4) über den Arbeitsanschluss (2a, 4a, 4b) angeschlossene Druckleitung (15), die Zuleitung (9a, 9b) zwischen dem jeweiligen Druckluftreservoir (6a, 6b) und dem jeweiligen Achsmodulator (2, 4) sowie pneumatische Komponenten innerhalb der jeweiligen pneumatisch angesteuerten Betriebsbremse (7) und innerhalb des Achsmodulators (2, 4), insbesondere das jeweilige Achsmodulator-Einlassventil (18, 18a, 18b) aufweist oder umfasst.

4. Verfahren nach Anspruch 1 oder 2, wobei der Druckimpuls durch Einstellen einer Druckabbau-Stellung (PX2) des Achsmodulators (2, 4) und/oder durch Öffnen des Achsmodulator-Auslassventils (8, 8a, 8b) bei gleichzeitig geschlossenem Achsmodulator-Einlassventil (14, 14a, 14b) erzeugt wird (ST3B, ST3F).

5. Verfahren nach Anspruch 4, wobei der Druckimpuls dadurch durch einen zweiten Strömungspfad (P2) oder einen sechsten Strömungspfad (P6) geleitet wird, der die an den jeweiligen Achsmodulator (2, 4) über den Arbeitsanschluss (2a, 4a, 4b) angeschlossene Druckleitung (15) sowie pneumatische Komponenten innerhalb der jeweiligen pneumatisch angesteuerten Betriebsbremse (7) und innerhalb des Achsmodulators (2, 4), insbesondere das jeweilige Achsmodulator-Auslassventil (16, 16a, 16b) aufweist oder umfasst.

6. Verfahren nach einem der vorhergehenden Ansprüche, wobei das Bremssystem (100) ferner ein in der jeweiligen Druckleitung (15) angeordnetes ABS-Ventil (11) aufweist, mit
- einem ABS-Einlassventil (18) zur Druckbeaufschlagung eines Zwischenabschnittes (13) zwischen dem ABS-Ventil (11) und der jeweiligen Betriebsbremse (7) mit Druckluft aus der jeweiligen Druckleitung (15), und
- einem ABS-Auslassventil (16) zur Entlüftung des Zwischenabschnittes (13) über einen ABS-Auslass (21),
wobei das Ermitteln des ersten Druckwertes (p1) erfolgt (ST2), während das ABS-Ventil (11) in der jeweiligen Druckleitung (15) in eine Druckaufbau-Stellung (PA3) verstellt ist und der Druckimpuls erzeugt wird, während der Achsmodulator (2) in die Druckhalte-Stellung (PX1) gebracht ist.

7. Verfahren nach Anspruch 6, wobei
- der Druckimpuls durch Einstellen einer ersten Druckabbau-Stellung (PA2a) des ABS-Ventils (11) in der jeweiligen Druckleitung (15) erzeugt wird (ST3D), wobei in der ersten Druckabbau-Stellung (PA2a) das ABS-Auslassventil (16) des ABS-Ventils (11) geöffnet und das ABS-Einlassventil (18) des ABS-Ventils (11) geschlossen ist oder wird, oder
- der Druckimpuls durch Einstellen einer zweiten Druckabbau-Stellung (PA2b) des ABS-Ventils (11) erzeugt wird (ST3C), wobei in der zweiten Druckabbau-Stellung (PA2b) das ABS-Auslassventil (16) und das ABS-Einlassventil (18) des ABS-Ventils (11) in der jeweiligen Druckleitung (15) beide geöffnet sind oder werden.

8. Verfahren nach Anspruch 7, wobei der Druckimpuls dadurch durch einen dritten Strömungspfad (P3) oder einen vierten Strömungspfad (P4) geleitet wird, der die an den jeweiligen Achsmodulator (2, 4) über den Arbeitsanschluss (2a, 4a, 4b) angeschlossene Druckleitung (15) vollständig oder zumindest teilweise in dem jeweiligen Zwischenabschnitt (13), das jeweilige ABS-Ventil (11), insbesondere das ABS-Auslassventil (16), das ABS-Einlassventil (18) und den ABS-Ventil-Auslass (21), sowie pneumatische Komponenten innerhalb der jeweiligen pneumatisch angesteuerten Betriebsbremse (7) aufweist oder umfasst.

9. Verfahren nach Anspruch 7 oder 8, wobei der zweite Druckwert (p2) nach dem Erzeugen des Druckimpulses zum zweiten Zeitpunkt (t2) ermittelt wird, während das ABS-Auslassventil (16) des jeweiligen ABS-Ventils (11) geschlossen ist oder nachdem das ABS-Auslassventil (16) des jeweiligen ABS-Ventils (11) geschlossen wurde, und das ABS-Einlassventil (16) des ABS-Ventils (11) geöffnet ist oder nachdem das ABS-Einlassventil (16) des ABS-Ventils (11) geöffnet wurde.

10. Verfahren nach einem der vorherigen Ansprüche, wobei
das Ermitteln des zweiten Druckwerts (p2) mittels des Drucksensors (12, 12a, 12b) des Achsmodulators (2, 4) (ST4) stattfindet, während der Achsmodulator (2, 4) über den Arbeitsanschluss (2a, 4a, 4b) über die Druckleitung (15, 17a, 17b) mit der mindestens einen Betriebsbremse (7) druckleitend verbunden ist und der Achsmodulator (2, 4) in eine Druckhalte-Stellung (PX1) gebracht ist.

11. Verfahren nach einem der vorherigen Ansprüche, wobei
der Druckwert (pW) über den jeweiligen Drucksensor (12, 12a, 12b) kontinuierlich ermittelt wird.

12. Verfahren nach einem der vorherigen Ansprüche, wobei
die Strömungswiderstandskenngröße (RLi) ermittelt wird aus einem Druckgradienten zwischen dem ersten Druckwert (p1) und dem zweiten Druckwert (p2), wobei der Druckgradient aus einem Quotienten aus (p2-p1) und (t2-t1) folgt.

13. Verfahren nach einem der vorherigen Ansprüche, wobei
die ermittelten Strömungswiderstandskenngrößen (RLi) in einen nichtflüchtigen Speicher gespeichert werden.

## Claims

1. Method for determining a flow resistance characteristic (RLi) in an electropneumatic braking system (100) of a vehicle (1), wherein the braking system (100) has at least:
- an axle modulator (2, 4) having
-- an axle modulator inlet valve (14, 14a, 14b) for pressurizing a pressure line (15, 17a, 17b) connected to at least one working port (2a, 4a, 4b) of the axle modulator (2, 4) using compressed air from a compressed air reservoir (6a, 6b) connected to the axle modulator (2, 4) via a supply line (9a, 9b),
-- an axle modulator outlet valve (8, 8a, 8b) for venting the pressure line (15, 17a, 17b) via an axle modulator outlet (19, 20), and
-- a pressure sensor (12, 12a, 12b) designed to ascertain a pressure value (pW) allocated to the relevant pressure line (15, 17a, 17b); and
- at least one service brake (7) connected to the pressure line (15, 17a, 17b),
comprising the following steps:
- ascertaining a first pressure value (p1) using the pressure sensor (12, 12a, 12b) of the axle modulator (2, 4) while the axle modulator (2, 4) is connected, so as to guide pressure, to the at least one service brake (7) via the working port (2a, 4a, 4b) and via the pressure line (15, 17a, 17b) and the axle modulator (2, 4) is brought into a pressure holding position (PX1) (ST2);
- generating a pressure pulse in the pressure line (15, 17a, 17b) at a first time (t1) (ST3A, ST3B, ST3C, ST3D, ST3E, ST3F);
- ascertaining a second pressure value (p2) using the pressure sensor (12, 12a, 12b) of the axle modulator (2, 4) at a second time (t2) after generating the pressure pulse (ST4); and
- determining a flow resistance characteristic (RLi) for a flow path (Pi) within the braking system (100) in which the generated pressure pulse propagates, on the basis of a change over time in the second pressure value (p2) with respect to the first pressure value (p1).

2. Method according to claim 1, wherein the pressure pulse is generated by setting a pressure build-up position (PX3) of the axle modulator (2, 4) and/or by opening an axle modulator inlet valve (14, 14a, 14b) while the axle modulator outlet valve (8, 8a, 8b) is simultaneously closed (ST3A, ST3E).

3. Method according to claim 2, wherein the pressure pulse is thereby guided through a first flow path (P1) or a fifth flow path (P5) which has or comprises the pressure line (15) connected to the relevant axle modulator (2, 4) via the working port (2a, 4a, 4b), the supply line (9a, 9b) between the relevant compressed air reservoir (6a, 6b) and the relevant axle modulator (2, 4), and pneumatic components within the relevant pneumatically controlled service brake (7) and within the axle modulator (2, 4), in particular the relevant axle modulator inlet valve (18, 18a, 18b).

4. Method according to claim 1 or 2, wherein the pressure pulse is generated by setting a pressure reduction position (PX2) of the axle modulator (2, 4) and/or by opening the axle modulator outlet valve (8, 8a, 8b) while the axle modulator inlet valve (14, 14a, 14b) is simultaneously closed (ST3B, ST3F).

5. Method according to claim 4, wherein the pressure pulse is thereby guided through a second flow path (P2) or a sixth flow path (P6) which has or comprises the pressure line (15) connected to the relevant axle modulator (2, 4) via the working port (2a, 4a, 4b), and pneumatic components within the relevant pneumatically controlled service brake (7) and within the axle modulator (2, 4), in particular the relevant axle modulator outlet valve (16, 16a, 16b).

6. Method according to any of the preceding claims, wherein
the braking system (100) further comprises an ABS valve (11) which is arranged in the relevant pressure line (15) and has
- an ABS inlet valve (18) for pressurizing an intermediate portion (13) between the ABS valve (11) and the relevant service brake (7) using compressed air from the relevant pressure line (15), and
- an ABS outlet valve (16) for venting the intermediate portion (13) via an ABS outlet (21),
wherein the first pressure value (p1) is ascertained (ST2) while the ABS valve (11) in the relevant pressure line (15) is adjusted into a pressure build-up position (PA3), and the pressure pulse is generated while the axle modulator (2) is brought into the pressure holding position (PX1).

7. Method according to claim 6, wherein
- the pressure pulse is generated by setting a first pressure reduction position (PA2a) of the ABS valve (11) in the relevant pressure line (15) (ST3D), wherein, in the first pressure reduction position (PA2a), the ABS outlet valve (16) of the ABS valve (11) is open or is opened and the ABS inlet valve (18) of the ABS valve (11) is in a closed state or is closed, or
- the pressure pulse is generated by setting a second pressure reduction position (PA2b) of the ABS valve (11) (ST3C), wherein, in the second pressure reduction position (PA2b), the ABS outlet valve (16) and the ABS inlet valve (18) of the ABS valve (11) in the relevant pressure line (15) are both open or are opened.

8. Method according to claim 7, wherein the pressure pulse is thereby guided through a third flow path (P3) or a fourth flow path (P4) which has or comprises the pressure line (15) connected to the relevant axle modulator (2, 4) via the working port (2a, 4a, 4b) completely or at least partially in the relevant intermediate portion (13), the relevant ABS valve (11), in particular the ABS outlet valve (16), the ABS inlet valve (18) and the ABS valve outlet (21), and pneumatic components within the relevant pneumatically controlled service brake (7).

9. Method according to claim 7 or 8, wherein the second pressure value (p2) is ascertained after generating the pressure pulse at the second time (t2) while the ABS outlet valve (16) of the relevant ABS valve (11) is closed or after the ABS outlet valve (16) of the relevant ABS valve (11) has been closed and the ABS inlet valve (16) of the ABS valve (11) is open or after the ABS inlet valve (16) of the ABS valve (11) has been opened.

10. Method according to any of the preceding claims, wherein the second pressure value (p2) is ascertained by means of the pressure sensor (12, 12a, 12b) of the axle modulator (2, 4) (ST4) while the axle modulator (2, 4) is connected, so as to guide pressure, to the at least one service brake (7) via the working connection (2a, 4a, 4b) and via the pressure line (15, 17a, 17b) and the axle modulator (2, 4) is brought into a pressure holding position (PX1).

11. Method according to any of the preceding claims, wherein the pressure value (pW) is continuously ascertained via the relevant pressure sensor (12, 12a, 12b).

12. Method according to any of the preceding claims, wherein the flow resistance characteristic (RLi) is ascertained from a pressure gradient between the first pressure value (p1) and the second pressure value (p2), wherein the pressure gradient is derived from a quotient of (p2-p1) and (t2-t1).

13. Method according to any of the preceding claims, wherein the ascertained flow resistance characteristics (RLi) are stored in a non-volatile memory.

## Revendications

1. Procédé pour la détermination d'une grandeur caractéristique de résistance à l'écoulement (RLi) dans un système de freinage (100) électropneumatique d'un véhicule (1), dans lequel le système de freinage (100) présente au moins :
- un modulateur d'essieu (2, 4) comportant
-- une soupape d'admission de modulateur d'essieu (14, 14a, 14b) pour la mise sous pression d'une conduite de pression (15, 17a, 17b), raccordée à au moins un raccord de travail (2a, 4a, 4b) du modulateur d'essieu (2, 4), avec de l'air comprimé provenant d'un réservoir d'air comprimé (6a, 6b) raccordé au modulateur d'essieu (2, 4) par l'intermédiaire d'une conduite d'alimentation (9a, 9b),
-- une soupape d'échappement de modulateur d'essieu (8, 8a, 8b) pour l'évacuation d'air de la conduite de pression (15, 17a, 17b) par l'intermédiaire d'un élément d'échappement de modulateur d'essieu (19, 20), et
-- un capteur de pression (12, 12a, 12b) configuré pour déterminer une valeur de pression (pW) associée à la conduite de pression (15, 17a, 17b) respective ; et
- au moins un frein de service (7) raccordé à la conduite de pression (15, 17a, 17b),
comprenant les étapes suivantes,
- détermination d'une première valeur de pression (p1) au moyen du capteur de pression (12, 12a, 12b) du modulateur d'essieu (2, 4), pendant que le modulateur d'essieu (2, 4) est raccordé d'une manière conductrice de pression à l'au moins un frein de service (7) par l'intermédiaire du raccord de travail (2a, 4a, 4b) par l'intermédiaire de la conduite de pression (15, 17a, 17b) et que le modulateur d'essieu (2, 4) est placé dans une position de maintien de pression (PX1) (ST2) ;
- génération d'une impulsion de pression dans la conduite de pression (15, 17a, 17b) à un premier instant (t1) (ST3A, ST3B, ST3C, ST3D, ST3E, ST3F) ;
- détermination d'une seconde valeur de pression (p2) au moyen du capteur de pression (12, 12a, 12b) du modulateur d'essieu (2, 4) à un second instant (t2) après la génération de l'impulsion de pression (ST4) ; et
- détermination d'une grandeur caractéristique de résistance à l'écoulement (RLi) pour un trajet d'écoulement (Pi) à l'intérieur du système de freinage (100), dans lequel se propage l'impulsion de pression générée, en fonction d'une variation temporelle de la seconde valeur de pression (p2) par rapport à la première valeur de pression (p1).

2. Procédé selon la revendication 1, dans lequel l'impulsion de pression est générée en réglant une position de montée en pression (PX3) du modulateur d'essieu (2, 4) et/ou en ouvrant une soupape d'admission de modulateur d'essieu (14, 14a, 14b) lorsque la soupape d'échappement de modulateur d'essieu (8, 8a, 8b) est simultanément fermée (ST3A, ST3E).

3. Procédé selon la revendication 2, dans lequel l'impulsion de pression est conduite par un premier circuit d'écoulement (P1) ou un cinquième circuit d'écoulement (P5) qui présente ou comprend la conduite de pression (15) raccordée au modulateur d'essieu (2, 4) respectif par l'intermédiaire du raccord de travail (2a, 4a, 4b), la conduite d'alimentation (9a, 9b) entre le réservoir d'air comprimé (6a, 6b) respectif et le modulateur d'essieu (2, 4) respectif ainsi que des composants pneumatiques à l'intérieur du frein de service (7) à commande pneumatique respectif et à l'intérieur du modulateur d'essieu (2, 4), en particulier la soupape d'admission de modulateur d'essieu (18, 18a, 18b) respective.

4. Procédé selon la revendication 1 ou 2, dans lequel l'impulsion de pression est générée en réglant une position de diminution de pression (PX2) du modulateur d'essieu (2, 4) et/ou en ouvrant la soupape d'échappement de modulateur d'essieu (8, 8a, 8b) lorsque la soupape d'admission de modulateur d'essieu (14, 14a, 14b) est simultanément fermée (ST3B, ST3F).

5. Procédé selon la revendication 4, dans lequel l'impulsion de pression est conduite par un deuxième circuit d'écoulement (P2) ou un sixième circuit d'écoulement (P6) qui présente ou comprend la conduite de pression (15) raccordée au modulateur d'essieu (2, 4) respectif par l'intermédiaire du raccord de travail (2a, 4a, 4b) ainsi que des composants pneumatiques à l'intérieur du frein de service (7) à commande pneumatique respectif et à l'intérieur du modulateur d'essieu (2, 4), en particulier la soupape d'échappement de modulateur d'essieu (16, 16a, 16b) respective.

6. Procédé selon l'une des revendications précédentes, dans lequel
le système de freinage (100) présente en outre une soupape ABS (11) disposée dans la conduite de pression (15) respective, comportant
- une soupape d'admission ABS (18) pour la mise sous pression d'une section intermédiaire (13), entre la soupape ABS (11) et le frein de service (7) respectif, avec de l'air comprimé provenant de la conduite de pression (15) respective, et
- une soupape d'échappement ABS (16) pour l'évacuation d'air de la section intermédiaire (13) par l'intermédiaire d'un élément d'échappement ABS (21),
dans lequel la détermination de la première valeur de pression (p1) est effectuée (ST2), pendant que la soupape ABS (11) dans la conduite de pression (15) respective passe dans une position de montée en pression (PA3) et que l'impulsion de pression est générée, pendant que le modulateur d'essieu (2) est placé en position de maintien de pression (PX1).

7. Procédé selon la revendication 6, dans lequel
- l'impulsion de pression est générée (ST3D) en réglant une première position de diminution de pression (PA2a) de la soupape ABS (11) dans la conduite de pression (15) respective, dans lequel, dans la première position de diminution de pression (PA2a), la soupape d'échappement ABS (16) de la soupape ABS (11) est ouverte et la soupape d'admission ABS (18) de la soupape ABS (11) est fermée, ou
- l'impulsion de pression est générée (ST3C) en réglant une seconde position de diminution de pression (PA2b) de la soupape ABS (11), dans lequel, dans la seconde position de diminution de pression (PA2b), la soupape d'échappement ABS (16) et la soupape d'admission ABS (18) de la soupape ABS (11) sont toutes deux ouvertes dans la conduite de pression (15) respective.

8. Procédé selon la revendication 7, dans lequel l'impulsion de pression est conduite par un troisième circuit d'écoulement (P3) ou un quatrième circuit d'écoulement (P4) qui présente ou comprend la conduite de pression (15), raccordée au modulateur d'essieu (2, 4) respectif par l'intermédiaire du raccord de travail (2a, 4a, 4b), entièrement ou au moins partiellement dans la section intermédiaire (13) respective, la soupape ABS (11) respective, en particulier la soupape d'échappement ABS (16), la soupape d'admission ABS (18) et l'élément d'échappement de soupape ABS (21), ainsi que des composants pneumatiques à l'intérieur du frein de service (7) à commande pneumatique respectif.

9. Procédé selon la revendication 7 ou 8, dans lequel la seconde valeur de pression (p2) est déterminée après la génération de l'impulsion de pression à un second instant (t2), pendant que la soupape d'échappement ABS (16) de la soupape ABS (11) respective est fermée ou après que la soupape d'échappement ABS (16) de la soupape ABS (11) respective a été fermée, et pendant que la soupape d'admission ABS (16) de la soupape ABS (11) est ouverte ou après que la soupape d'admission ABS (16) de la soupape ABS (11) a été ouverte.

10. Procédé selon l'une des revendications précédentes, dans lequel la détermination de la seconde valeur de pression (p2) au moyen du capteur de pression (12, 12a, 12b) du modulateur d'essieu (2, 4) (ST4) a lieu pendant que le modulateur d'essieu (2, 4) est raccordé d'une manière conductrice de pression à l'au moins un frein de service (7) par l'intermédiaire du raccord de travail (2a, 4a, 4b) par l'intermédiaire de la conduite de pression (15, 17a, 17b) et que le modulateur d'essieu (2, 4) est placé dans une position de maintien de pression (PX1).

11. Procédé selon l'une des revendications précédentes, dans lequel la valeur de pression (pW) est déterminée en continu par l'intermédiaire du capteur de pression (12, 12a, 12b) respectif.

12. Procédé selon l'une des revendications précédentes, dans lequel la grandeur caractéristique de résistance à l'écoulement (RLi) est déterminée à partir d'un gradient de pression entre la première valeur de pression (p1) et la seconde valeur de pression (p2), dans lequel le gradient de pression résulte d'un quotient de (p2 - p1) et (t2 - t1).

13. Procédé selon l'une des revendications précédentes, dans lequel les grandeurs caractéristiques de résistance à l'écoulement (RLi) déterminées sont enregistrées dans une mémoire non volatile.
